# EUROPÄISCHE PATENTANMELDUNG

(11) **EP 3 527 920 A1**
(43) Veröffentlichungstag der Anmeldung: **21.08.2019**
(21) Anmeldenummer: 19163635.6
(22) Anmeldetag: 11.08.2015
(51) Int. Cl.: F28D 20/00, C12C 13/02, C12C 7/22, F28F 27/00, F28D 21/00

(54) **BRAUEREIANLAGE UND VERFAHREN ZUR WÄRMESPEICHERUNG BEI EINER BRAUEREIANLAGE**

(30) Priorität: 28.08.2014 DE 102014112366
(62) Teilanmeldung aus: 15180541.3
(71) Anmelder: Krones AG, 93073 Neutraubling (DE)
(72) Erfinder: FRIEDRICH, Michael, 93073 Neutraubling (DE); KAMMERLOHER, Helmut, 93073 Neutraubling (DE); KUMPF, Christoph, 93073 Neutraubling (DE)
(74) Vertreter: Reichert & Lindner Partnerschaft Patentanwälte

(57) **Zusammenfassung**

Es ist eine Brauereianlage (50) offenbart, die einen Wärmespeicher (5), einen Wärmeerzeuger (9), mindestens einen rekuperativen Wärmetauscher (27), der als ein Pfannendunstkondensator (52) ausgebildet ist, und zumindest eine Würzekoch- und/oder Würzeheißhalteeinrichtung (51) umfasst. Hierzu ist die Würzekoch- und/oder Würzeheißhalteeinrichtung (51) über ein Mischventil (24) mit dem Wärmeerzeuger (9) verbunden. Ein Rücklauf (12) der Würzekoch- und/oder Würzeheißhalteeinrichtung (51) und ein Rücklauf (12) des rekuperativen Wärmetauschers (27) sind mit einer Zwischensicht (102) des Wärmespeichers (5) über ein Belademittel (20) verbunden.

Zudem ist ein Verfahren zur Wärmespeicherung bei einer Brauereianlage (50) offenbart.

## Beschreibung

Die vorliegende Erfindung betrifft eine Brauereianlage. Die Brauereianlage umfasst einen Wärmespeicher mit einem Speichermedium. Ferner ist der Brauereianlage mindestens ein rekuperativer Wärmetauscher, der als ein Pfannendunstkondensator ausgebildet ist, zugeordnet. Die Brauereianlage umfasst zumindest eine Würzekoch- und/oder Würzeheißhalteeinrichtung.

Ferner betrifft die Erfindung ein Verfahren zur Wärmespeicherung bei einer Brauereianlage.

Die thermische Energie stellt in einer Brauerei bzw. in einer Anlage für die Getränkeherstellung einen nicht unerheblichen Kostenfaktor dar. Alle Bestrebungen zielen darauf ab, den Brauprozess bzw. den Getränkeherstellungsprozess mit möglichst geringem Aufwand an Primärenergie zu gestalten. Die Potentiale für Wärmerückgewinnung, speziell im Bereich der Würzeherstellung, sind dabei bereits sehr weit ausgereift, basieren aber in aller Regel auf einer Zwischenspeicherung der Wärme in Form von unterschiedlich heißem Brauwasser bzw. Wärmespeicherwasser (Speichermedium), das unter anderem bei der Würzekühlung gewonnen wird. Verfahrensbedingt kommt es dabei immer zu großen Wärmeüberschüssen in Form von heißem Brauwasser, für die es zunehmend schwieriger wird, eine sinnvolle Verwendung innerhalb des Brauereibetriebs bzw. des Betriebs zur Getränkeherstellung zu finden. Darüber hinaus kann die rückgewonnene Wärme in Form des erwärmten Brauwassers aus hygienischen Gründen nicht beliebig lange gespeichert werden, was sich besonders bei Brauereianlagen mit niedrigen Sudfolgen und längeren Sudpausen negativ auf die Energiebilanz auswirkt. Das hierfür erforderliche technologische Hintergrundwissen ist in den Druckschriften DE 10 2012 220 581 A1, EP 0 819 893 A2, DE 10 2010 042 765 A1, DE 10 2005 013 314 A1 und DE 198 46 364 A1 offenbart.

Aus dem Fachbuch "Technologie Brauer und Mälzer" von Wolfgang Kunze, erschienen im VLB-Verlag Berlin (10. überarbeitete Auflage, erschienen 2011) ist auf Seite 363 ein Kochsystem mit einem Wärmespeichertank beschrieben. Die Temperaturen im Wärmespeichertank liegen dabei zwischen 78°C und 98°C.

Die deutsche Offenlegungsschrift DE 10 2011 055 146 A1 offenbart eine Brauereianlage und ein Verfahren zur Erwärmung von Brau- und Brauchwasser in einer Brauereianlage. Die Brauereianlage umfasst mindestens ein Maischgefäß, sowie zumindest einem diesem nachgeordneten Prozessbehälter und eine Würzpfanne. Ebenso sind diese Elemente mit einer Brau- und Brauchwasserzuleitung versehen, so dass ein Brauwasserkaltbehälter mit dem Maischgefäß oder einem Vormaischer verbunden ist. Ebenso ist ein Wärmeübertragungsfluidkreislauf vorgesehen, der mehrere Wärmetauscher aufweist. Die Brau- und Brauchwasserzuleitung wird dabei über den entsprechenden Wärmetauscher geführt, aufgeheizt und dem Maischgefäß, oder dem Vormaischer, zugeführt.

Aus der deutschen Offenlegungsschrift DE 2011 055 147 A1 ist ein Verfahren zur Einspeisung von Wärmeenergie in ein in einer lebensmitteltechnischen Prozessanlage zu verarbeitendes Prozessmittel, sowie ein Wärmeversorgungssystem dafür offenbart. Es ist ein Pufferspeicher offenbart, welcher über verschiedene Temperaturniveaus verfügt. Um eine möglichst geringe Vermischung gewährleisten zu können, werden die zuführenden Temperaturniveaus gemessen und in unterschiedlichen Höhen ein- und ausgelagert.

Aus der internationalen Patentanmeldung WO 2011/076410 A1 ist eine Vorrichtung und ein Verfahren zum Rückgewinnen von Energie offenbart. Die Energie wird dabei aus einem heißen Medium, insbesondere heißer Würze oder heißer Maische, für eine Bierbrauerei mit einer ersten Wärmetauschereinrichtung für einen Wärmeträger zurückgewonnen. Die Wärmetauschereinrichtung ist insbesondere nach einer Einrichtung zum Aufheizen, Kochen oder Heißhalten von Würze oder Maische angeordnet und derart ausgebildet, dass unter Abkühlen von vorzugsweise Würze oder Maische der Wärmeträger erwärmbar ist. Mindestens ein Wärmeverbraucher der Brauerei kann mit diesem Wärmeträger beheizt werden. Der beim Erwärmen des Wärmeverbrauchers abgekühlte Wärmeträger kann wieder dem Kreislauf der ersten Wärmetauschereinrichtung zugeführt werden. Es ist ebenfalls ein Wärmespeichertank offenbart, welcher über eine Schichtladelanze verfügt, mit welcher ebenfalls eine Einlagerung im richtigen Temperaturniveau ermöglicht wird.

Aus der internationalen Patentanmeldung WO 2009/062597 A2 ist ein Brauverfahren und eine Brauereianlage offenbart. Die in einem Wärmespeicher gespeicherte Energie wird an einen Wärmeverbraucher abgegeben. Je nach Rücklauftemperatur wird entschieden, ob das Speichermedium direkt in den Wärmespeicher zurückgeführt wird, oder ob es einem weiteren Wärmeverbraucher mit einem geringeren Temperaturniveau zugeführt wird. Dieser weitere Wärmeverbraucher kann dem Speichermedium somit weitere Energie entziehen. Nachteilig hierbei ist jedoch, dass der, für die Beheizung eines vorgesehenen Wärmeverbrauchers, erforderliche Wärmestrom und auch die Wärmemenge nicht ausreichend hoch bzw. vorhanden ist, so dass keine akzeptable Aufheizrate gewährleistet werden kann.

Aufgabe der gegenwärtigen Erfindung ist, eine Brauereianlage zur Verfügung zu stellen, die eine Möglichkeit der Wärmespeicherung für Wärmeverbraucher beim Brauereiprozess schafft, wobei für die Wärmeverbraucher ein gesamtheitliches Energie- und Wärme-Management zur Verfügung gestellt ist und wobei die Vor- und Rücklauftemperaturen des Speichermediums in Bezug auf einen laufenden bzw. einen nachfolgenden Brauprozess optimiert sind.

Diese Aufgabe wird durch eine Brauereianlage gelöst, die die Merkmale des Anspruchs 1 umfasst.

Eine weitere Aufgabe der gegenwärtigen Erfindung ist, ein Verfahren zur Wärmespeicherung für Wärmeverbraucher bei einer Brauereianlage zu schaffen, welches für die Wärmeverbraucher ein gesamtheitliches Energie- und Wärme-Management zur Verfügung stellt und wobei die Vor- und Rücklauftemperaturen des Speichermediums in Bezug auf einen laufenden bzw. nachfolgenden Herstellungsprozess (Brauprozess) bei einer Brauereianlage optimiert sind.

Diese Aufgabe wird durch ein Verfahren zur Wärmespeicherung bei einer Brauereianlage gelöst, das die Merkmale des Anspruchs 9 umfasst.

Die erfindungsgemäße Brauereianlage umfasst einen Wärmespeicher, einen Wärmeerzeuger, mindestens einen rekuperativen Wärmetauscher, der gemäß einer möglichen Ausführungsform als ein Pfannendunstkondensator ausgebildet sein kann, einen Läuterwürzeerhitzer und eine Würzekoch- und/oder Würzeheißhalteeinrichtung mit Wärmetauscher. Die Würzekoch- und/oder Würzeheißhalteeinrichtung ist mit dem Wärmeerzeuger verbunden, um das Speichermedium aus dem Wärmeerzeuger empfangen. Ein Rücklauf der Würzekoch- und/oder Würzeheißhalteeinrichtung und ein Rücklauf des rekuperativen Wärmetauschers sind mit einer Zwischensicht des Wärmespeichers über ein Belademittel verbunden.

Gemäß einer möglichen Ausführungsform kann der Würzekoch- und/oder Würzeheißhalteeinrichtung ein Speichermedium aus einer oberen Schicht des Wärmespeichers zugeführt werden. Hierzu ist die obere Schicht mit dem Wärmeerzeuger verbunden. Der erhitztes Speichermedium dem Wärmespeicher zuführt.

Gemäß einer möglichen Ausführungsform kann die Würzekoch- und/oder Würzeheißhalteeinrichtung zusätzlich mit der oberen Schicht des Wärmespeichers verbunden werden. Dadurch kann die Würzekoch- und/oder Würzeheißhalteeinrichtung zusätzlich zum Wärmeerzeuger aus der oberen Schicht des Wärmespeichers mit dem Speichermedium versorgt werden.

Ferner kann die Brauereianlage, zusätzlich, zumindest ein Element aus der Gruppe von Maischbottichpfanne, Maischbottich, Flaschenreinigungsmaschine, Läuterwürzeerhitzer, CIP-Anlage oder weitere zweite Wärmeverbraucher umfassen, die mit den Entnahmestellen aus der oberen Schicht und/oder der Zwischensicht des Wärmespeichers verbunden sind. Diesen Elementen kann somit das Speichermedium zugeführt werden. Die Rückläufe dieser Elemente sind über das Belademittel mit der unteren Schicht des Wärmespeichers verbunden, so dass dem Wärmespeicher das Speichermedium zugeführt wird.

Zwischen der oberen Schicht und der unteren Schicht im Wärmespeicher kann ein Temperaturbereich von 150°C bis 70°C vorherrschen. Gemäß einer bevorzugten Ausführungsform besitzt die obere Schicht ein Temperaturniveau von 105°C bis 130°C, besonders bevorzugt wird ein Temperaturniveau von 105°C bis 120°C. Gemäß einer bevorzugten Ausführungsform besitzt die Zwischenschicht ein Temperaturniveau von 90°C bis mindestens zur Siedetemperatur des Speichermediums, besonders bevorzugt wird ein Temperaturniveau von 95°C bis 98°C. Gemäß einer bevorzugten Ausführungsform besitzt die untere Schicht ein Temperaturniveau unter 90°C, besonders bevorzugt wird ein Temperaturniveau von 75°C bis 85°C.

Die Brauereianlage kann gemäß einer möglichen Ausführungsform mit einer Steuerung versehen sein. Die Steuerung regelt den Zufluss über die Belademittel und die Entnahme an Entnahmestellen derart, dass jede der Schichten mit den jeweils zugeordneten Belademitteln bzw. den Entnahmestellen verbunden bleiben. Die Steuerung ist ebenfalls mit den Mischventilen verbunden, um die Temperatur des Speichermediums einzustellen, damit dieses zumindest einem der Elemente aus der Gruppe von Würzekoch- und/oder Würzeheißhalteeinrichtung, Läuterwürzeerhitzer, Maischbottichpfanne, Maischbottich, Flaschenreinigungsmaschine, CIP-Anlage und weiteren zweiten Wärmeverbrauchern zuführbar ist.

Gemäß einer möglichen Ausführungsform kann der Wärmespeicher mehrere Sensoren umfassen, die kommunikativ mit der Steuerung verbunden sind. Die Sensoren ermitteln und überwachen die räumliche Ausdehnung der drei Schichten im Wärmespeicher.

Die Wärmespeicherung in der Brauereianlage zeichnet sich dadurch aus, dass ein Wärmespeicher mit einem Wärmespeichermedium, das vorzugsweise Wasser ist, mit mehreren Wärmeverbrauchern in Verbindung steht. Die mehreren Wärmeverbraucher sind zur Einspeisung und/oder Entnahme von Wärmeenergie mit dem Wärmespeicher verbunden. Das Speichermedium selbst ist im Wärmespeicher in mehreren Schichten mit jeweils unterschiedlichen Temperaturbereichen gespeichert. In dem Wärmespeicher können bzw. Temperaturen von 70°C bis 150°C vorherrschen. In dem Wärmespeicher sind mindestens drei diskrete Schichten ausgebildet. Der Wärmespeicher selbst ist dabei derart ausgebildet, dass, je nach Bedarf, jede der mindestens drei diskreten Schichten mit einem Belademittel im jeweiligen Temperaturbereich kommunikativ zum temperaturabhängigen Einschichten verbunden ist. Dadurch ist eine obere Schicht mit einem Speichermedium aus einem Wärmeerzeuger, eine Zwischenschicht mit einem Speichermedium aus dem mindestens einen Rücklauf eines Wärmetauschers eines mindestens ersten Wärmeverbrauchers und eine untere Schicht mit einem Speichermedium aus mindestens einem Rücklauf eines Wärmetauschers eines mindestens zweiten Wärmeverbrauchers gezielt beladbar.

Das Belademittel umfasst mindestens eine Lanze, die in der jeweiligen Schicht im Wärmespeicher endet. Die Lanze kann als mindestens eine Schichtladelanze oder als mindestens eine horizontale Lanze ausgebildet sein, womit das Speichermedium in den Wärmespeicher eingeschichtet wird.

Eine weitere Möglichkeit der Ausgestaltung des Belademittels kann sein, dass am Wärmespeicher mehrere Einschichtstellen ausgebildet sind, die in die jeweilige Schicht im Wärmespeicher münden. Selbstverständlich ist es auch denkbar, dass beim Wärmespeicher auch eine Kombination aus Schichtladelanzen und Einschichtstellen möglich ist.

In der oberen Schicht des Wärmespeichers herrscht ein Temperaturbereich über der Siedetemperatur des Speichermediums vor. Da es sich bei dem Speichermedium vorzugsweise um Wasser handelt, liegt der Temperaturbereich somit über 100° C. Es ist für einen Fachmann selbstverständlich, dass die Siedetemperatur des Speichermediums von dem Aufstellort über Meereshöhe abhängt. Die Wärmeverbraucher, welche eine Produkttemperatur von >= 95°C benötigen, werden als Hochtemperaturverbraucher bezeichnet. Bei einem Brauprozess für die Bierherstellung sind dies insbesondere die Maische- und Würzekochung bzw. die Würzeheißhaltung. Um das Produkt in diesen Hochtemperaturverbrauchern auf die erforderliche Temperatur von >= 95°C zu bringen, benötigt das Speichermedium ein Temperaturniveau von nahezu bzw. über 100°C. Um allerdings den benötigten Wärmestrom bei wirtschaftlich sinnvollen Wärmeübertragungsflächen bzw. Wärmetauschern zu erreichen, werden Temperaturniveaus von über 105°C benötigt bzw. bevorzugt. Für die Produktqualität von Maische, Würze oder Bier des aufzuheizenden Mediums und dem Foulingverhalten des Heizapparates ist eine möglichst niedrige Vorlauftemperatur des Speichermediums von Vorteil. Außerdem können mit niedrigen Temperaturen des Speichermediums die Wärmeverluste bei der Erzeugung und der Verteilung der Wärme minimiert werden. Aus diesen Gründen sollte im Wärmespeicher die oberste (wärmste) Schicht eine Temperatur von beispielsweise 130°C, insbesondere eine Temperatur bis maximal 120°C und bevorzugt eine Temperatur bis maximal 115°C aufweisen.

Manche Wärmeerzeuger benötigen für eine hohe Effizienz eine konstant niedrige Rücklauftemperatur aus den Wärmetauschern für die Wärmeverbraucher, in etwa 80°C. Als Wärmeerzeuger kann, zum Beispiel, Dampf, Solarthermie, Fernwärme oder ein Blockheizkraftwerk verwendet werden. Der Vorteil der Erfindung ist, dass der Wärmespeicher alle Wärmeverbraucher der Anordnung mit den für sie optimierten Temperaturen versorgt. Hinzu kommt, dass ebenfalls der Wärmeerzeuger mit einem optimierten Temperaturniveau versorgt werden kann, so dass dieser effizient das Speichermedium auf ein erforderliches Temperaturniveau für die Einspeisung in den Speicher bzw. bereits für die Versorgung eines ersten Wärmeverbrauchers (Hochtemperaturverbraucher) bringt.

So ist zum Beispiel eine Entnahmestelle in der unteren Schicht vorgesehen, die über eine Leitung mit dem Wärmeerzeuger verbunden ist. In einer weiteren Ausgestaltung sind der Rücklauf des mindestens einen ersten Wärmeverbrauchers (Hochtemperaturverbraucher) und/oder die Zwischenschicht mit einem Mischventil über eine Leitung mit einer weiteren Leitung verbunden. Dies hat wiederum den Vorteil, dass die Temperatur des in der Leitung befindlichen Speichermediums, durch Zumischung einer höheren Temperatur des Speichermediums aus der Leitung, auf ein höheres Temperaturniveau gebracht werden kann, so dass letztendlich dem Wärmeerzeuger das Speichermedium gezielt, mit einer höheren Temperatur, als wie üblich von ca. 80 °C, zugeführt werden kann. Hinzu kommt, dass, wenn das Speichermedium aus der unteren Schicht mit weniger als 80°C in der Leitung vorherrscht, dieses durch Beimischung des Speichermediums aus der Zwischenschicht auf die erforderliche Temperatur von >= 80 °C gebracht werden kann.

Ferner ist eine zentrale Steuerung vorgesehen, die mit den Mischventilen verbunden ist. Durch die Steuerung kann somit ein Volumenstrom des Speichermediums in der Anlage optimiert werden. Mit den Sensoren kann sichergestellt werden, dass eine optimale Beladung des Wärmespeichers mit den mindestens drei Schichten gegeben ist. Der Wärmespeicher hat eine Entnahmestelle für Wärmeverbraucher in der oberen Schicht und eine Entnahmestelle in der Zwischenschicht ausgebildet. Über jeweils eine Leitung wird die Entnahmestelle zu einem Mischventil geführt, das dem jeweiligen Wärmeverbraucher vorgeschaltet ist. Durch das Zusammenwirken der Mischventile mit der Steuerung für die Brauereianlage kann somit eine optimale Temperatur für den jeweiligen Wärmetauscher des jeweiligen Wärmeverbrauchers eingestellt werden, damit der Wärmeübergang optimiert ist.

Gemäße der Ausführungsform, bei der zusätzlich mehrere Sensoren dem Wärmeverbraucher zugeordnet sind, wird die räumliche Ausdehnung, sprich die Schichtdicke, der mindestens drei Schichten im Wärmespeicher ermittelt. Dadurch ist es möglich, den Zufluss über die Belademittel und die Entnahme an den Entnahmestellen derart zu steuern, dass jede der Schichten mit den jeweils zugeordneten Belademitteln bzw. den Entnahmestellen verbunden bleibt. Dies ist umso wichtiger, damit eine Entnahme und eine Beladung immer in den dafür vorgesehenen Schichten erfolgt und eine Durchmischung der diskreten Schichten im Wärmespeicher vermieden wird.

Gemäß einer Ausführungsform der Erfindung ist der Wärmespeicher auch als Druckspeicher ausgestaltet. Die Erfindung hat den Vorteil, dass im Wärmespeicher mindestens drei Temperaturniveaus vorgesehen sind. Entscheidend ist hierbei, dass die obere Schicht (Hochtemperaturschicht), welche über 100°C aufweist, beispielsweise 105°C bis 130°C, bevorzugt aber 105°C bis 120°C, vorhanden ist. Aus dieser oberen Schicht werden ein oder mehrere erste Verbraucher (Hochtemperaturverbraucher) versorgt. Der Rücklauf von diesen ersten Verbrauchern wird unter der oberen Schicht, also in der Zwischenschicht, wieder eingelagert und so lange zwischengespeichert, bis er für einen zweiten Wärmeverbraucher verwendet wird. Das Speichermedium hat dann im Rücklauf des zweiten Wärmeverbrauchers eine Temperatur von etwa 80°C. Die von den ersten Verbrauchern eingelagerte Rücklaufmenge sollte also bevorzugt so groß sein, dass sie für eine Erhitzung im zweiten Wärmeverbraucher ausreichend ist. Ein Vorteil der Steuerung und der Ausgestaltung des Wärmespeichers ist, dass die notwendigen Temperaturniveaus geschaffen und erhalten werden, so dass ausreichend Speichermedium in der jeweiligen Temperaturschicht vorhanden ist, um so eine optimale Versorgung der entsprechenden Wärmeverbraucher und auch des Wärmeerzeugers zu gewährleisten und keine Schicht unkontrolliert anwächst.

Das erfindungsgemäße Verfahren zur Wärmespeicherung bei einer Brauereianlage zeichnet sich dadurch aus, dass zunächst das Beladen des Wärmespeichers der Brauereianlage erfolgt. Bei dem Beladen werden im Wärmespeicher mindestens drei diskrete Schichten ausgebildet, die sich hinsichtlich der Temperaturbereiche unterscheiden. Obwohl sich die nachstehende Beschreibung auf drei diskrete Schichten beschränkt, soll dies nicht als Beschränkung der Erfindung aufgefasst werden. Es ist für einen Fachmann selbstverständlich, dass mehr als drei diskrete Schichten im Wärmespeicher vorgesehen sein können. Die obere Schicht (Hochtemperaturschicht) wird mit einem Speichermedium in einem ersten Temperaturniveau vom Wärmeerzeuger gespeist. Eine Zwischenschicht wird mit einem zweiten Temperaturniveau des Speichermediums aus dem mindestens einen Rücklauf des mindestens einen ersten Wärmeverbrauchers (Hochtemperaturwärmeverbraucher) beladen. Gemäß einer Ausführungsform der Erfindung kann der Rücklauf der rekuperativen Wärmetauscher ebenfalls in die Zwischenschicht eingelagert werden. Eine untere Schicht wird mit einem Speichermedium eines dritten Temperaturniveaus aus mindestens einem Rücklauf eines mindestens zweiten Wärmeverbrauchers gezielt beladen.

Das Speichermedium kann, falls mehr als drei Schichten vorgesehen sind, auch aus der unteren Schicht und/oder aus einer auf die untere Schicht folgenden Zwischenschicht entnommen und dem Wärmeerzeuger zugeführt werden.

Der Wärmeerzeuger bringt das Speichermedium aus der unteren Schicht oder einer Zwischensicht (bei mehr als drei Schichten) auf das erste Temperaturniveau und führt das Speichermedium wiederum der oberen Schicht zu.

Ebenso kann das Speichermedium aus der Zwischenschicht entnommen und einem rekuperativen Wärmetauscher zugeführt werden. Der rekuperative Wärmetauscher kann gemäß einer möglichen Ausführungsform der Erfindung ein Pfannendunstkondensator sein.

Gemäß einer weiteren Ausführungsform der Erfindung kann ein Speichermedium aus der oberen Schicht und der Zwischenschicht entnommen werden. Über entsprechende Leitungen werden das Speichermedium aus der oberen Schicht und das Speichermedium aus der Zwischenschicht zu einem Mischventil geführt, das jeweils mindestens einem zweiten Wärmeverbraucher vorgeschaltet ist. Das Speichermedium, welches sich dann in dem mindestens einen Rücklauf des mindestens zweiten Wärmeverbrauchers befindet, wird der unteren Schicht des Wärmespeichers zugeführt. Ebenso wird das Speichermedium aus dem mindestens einen Rücklauf der mindestens einen Würzekoch- und/oder Würzeheißhalteeinrichtung (Hochtemperaturverbraucher) der Zwischenschicht des Wärmespeichers zugeführt.

Gemäß einer möglichen Ausgestaltung kann über ein der oberen Schicht zugeordnetes Belademittel mit einem Mischventil ein Speichermedium aus dem Wärmeerzeuger der oberen Schicht zugeführt werden. Ebenso kann mit dem Belademittel aus der oberen Schicht und/oder aus dem Wärmeerzeuger mittels des Mischventils das Speichermedium dem ersten Wärmeverbraucher (Hochtemperaturverbraucher) zugeführt werden.

Das Speichermedium, im Rücklauf des mindestens einen zweiten Wärmeverbrauchers, wird mit dem Belademittel der unteren Schicht zugeführt.

Bei dem erfindungsgemäßen Verfahren wird in der oberen Schicht die Temperatur über der Siedetemperatur des Speichermediums eingestellt. In der Zwischenschicht wird die Temperatur zwischen 90°C und mindestens der Siedetemperatur des Speichermediums eingestellt und in der unteren Schicht wird die Temperatur des Speichermediums auf unter 90°C eingestellt.

Wie bereits in der Beschreibung zur Anordnung erwähnt, dient die zentrale Steuerung zum optimalen Management und der Zuführung des Speichermediums zu den ersten bzw. zweiten Verbrauchern. Hinzu kommt, dass mit der Steuerung, ebenfalls, die optimierte Einlagerung in den Wärmespeicher bewerkstelligt wird. So wird, zum Beispiel, das der Würzekoch- und/oder Würzeheißhalteeinrichtung zugeordnete Mischventil derart gesteuert, dass der Würzekoch- und/oder Würzeheißhalteeinrichtung das Speichermedium zumindest aus dem Wärmeerzeuger zugeführt wird. Eine zusätzliche Zuführung aus der oberen Schicht ist ebenfalls denkbar. Somit kann die Temperatur des zugeführten Speichermediums nach Bedarf der Würzekoch- und/oder Würzeheißhalteeinrichtung (Hochtemperaturverbraucher) eingestellt werden.

Gleiches gilt natürlich auch für die Mischventile, die den zweiten Wärmeverbrauchern zugeordnet sind. Die Mischung über die Mischventile wird ebenfalls mit der Steuerung gesteuert, so dass einem jeden zweiten Wärmeverbraucher das Speichermedium aus der oberen Schicht und/oder aus der Zwischenschicht zugeführt wird. Dies hat ebenfalls den Vorteil, dass die Temperatur des zugeführten Speichermediums nach Bedarf des jeweiligen zweiten Wärmeverbrauchers eingestellt werden kann.

Bei der erfindungsgemäßen Brauereianlage sind mit dem Wärmespeicher mindestens ein Wärmeerzeuger sowie mindestens ein rekuperativer Wärmetauscher (zum Beispiel: Pfannendunstkondesator) direkt verbunden. Je nach Ausbau der Brauereianlage kann auch zumindest eine der Einrichtungen oder Elemente, wie zum Beispiel eine Würzekoch- und/oder Würzeheißhalteeinrichtung, ein Läuterwürzeerhitzer, eine Maischbottichpfanne, ein Maischbottich, eine Flaschenreinigungsmaschine, eine CIP-Anlage und weitere zweite Wärmeverbraucher, vorgesehen sein, die über Rückläufe von den jeweiligen Wärmetauschern mit dem Wärmespeicher kommunikativ verbunden sind. Der Würzepfanne ist ein Mischventil vorgeschaltet, so dass dem Außenkocher der Würzepfanne, bei Bedarf, ein Speichermedium aus dem Wärmeerzeuger und/oder aus einer oberen Schicht des Wärmespeichers zuführbar ist. Der Rücklauf der Würzepfanne und des Pfannendunstkondensators sind einer Zwischenschicht des Wärmespeichers über ein Belademittel zuführbar. Dem Läuterwürzeerhitzer, der Maischbottichpfanne, dem Maischbottich, der Flaschenreinigungsmaschine, der CIP-Anlage und weiteren zweiten Wärmeverbrauchern ist jeweils ein Mischventil vorgeschaltet. Somit kann dem Wärmetauscher, bei Bedarf, das Speichermedium über Entnahmestellen aus der oberen Schicht und/oder der Zwischenschicht des Wärmespeichers zugeführt werden. Die Rückläufe der jeweiligen Wärmetauscher sind der unteren Schicht des Wärmespeichers über ein Belademittel zuführbar.

Bei der Brauereianlage kann der Würzekoch- und/oder Würzeheißhalteeinrichtung ein Außenkocher (Wärmetauscher) zugeordnet sein. Die Würzekoch- und/oder Würzeheißhalteeinrichtung ist mit einem Pfannendunstkondensator zur Brüdenrekuperation verbunden. Der Rücklauf aus dem rekuperativen Wärmetauscher (Außenkocher) und der Rücklauf aus dem Pfannendunstkondensator sind mit der Zwischenschicht des Wärmespeichers verbunden.

Die Brauereianlage ist mit einer Steuerung versehen, die, gemäß einer möglichen Ausführungsform, mit Sensoren verbunden ist, damit auch die räumliche Ausdehnung der mindestens drei Schichten im Wärmespeicher ermittelt werden kann. Ebenso wird mittels der Steuerung ein Zufluss über die Belademittel und eine Entnahme an Entnahmestellen gesteuert, so dass jede der Schichten mit den jeweils zugeordneten Belademitteln bzw. den Entnahmestellen verbunden bleibt. Ebenso ist die Steuerung mit den Mischelementen (zum Beispiel: Mischventil) verbunden, um die Temperatur, der Elemente einer Brauereianlage, die, zum Beispiel, mindestens eine Würzekoch- und/oder Würzeheißhalteeinrichtung, mindestens einen Pfannendunstkondensator, mindestens ein Läuterwürzeerhitzer, mindestens eine Maischbottichpfanne, mindestens ein Maischbottich, mindestens eine Flaschenreinigungsmaschine, mindestens eine CIP-Anlage und einen weiteren zweiten Wärmeverbraucher sind, des zugeführten Speichermediums einzustellen.

Die Steuerung kann mit den Sensoren und den Mischventilen verdrahtet sein, oder auch, drahtlos kommunizieren. Bei der Ausführungsform der Steuerung, ohne die Sensoren, kommuniziert die Steuerung mit den Mischventilen drahtgebunden oder drahtlos.

Bei der gegenwärtigen Erfindung wird die Energieschaukel, die aus dem Pfannendunstkondensator, der Würzekoch- und/oder Würzeheißhalteeinrichtung sowie dem Läuterwürzeerhitzer besteht, verändert. Es versteht sich, dass der Wärmespeicher ein notwendiger Bestandteil der Energieschaukel ist. Der Läuterwürzeerhitzer wird gemäß der Erfindung nicht mehr ausschließlich vom Pfannendunstkondensator versorgt. Die Versorgung erfolgt somit teilweise oder komplett vom Rücklauf der Würzekoch- und/oder Würzeheißhalteeinrichtung (Hochtemperaturverbraucher). Die Vorlauftemperatur zum Läuterwürzeerhitzer soll jedoch bevorzugt so hoch ausmischbar sein, dass die Läuterwürze in einem Aufheizschritt auf nahe Kochtemperatur oder darüber hinaus erhitzt werden kann. Wie aus dem Stand der Technik bekannt, wird bei der Energieschaukel aus Läuterwürzeerhitzer und Pfannendunstkondensator eine Gesamtverdampfung von rund 4% benötigt. Durch die erfindungsgemäße Entkoppelung dieser Schaukel wird eine Reduzierung der Gesamtverdampfung bei einem weiterhin ausgeglichenen Energiekonzept ermöglicht. Es ergeben sich daraus drei Vorteile: Erstens kann die Läuterwürze auf ein höheres Temperaturniveau gebracht werden. Zweitens kann die Belegungszeit in der Würzepfanne verkürzt werden. Drittens erreicht man durch die Entkopplung dieser Energieschaukel eine höhere Variabilität in der Verfahrensweise der Würzekochung.

Bei einer Gesamtverdampfung von 4% bei der Würzekochung reicht die Brüdenenergie aus, um die bekannte Energieschaukel zu bedienen. Die Würze wird dabei von, beispielsweise, 75 °C auf 92 °C erwärmt. Reduziert man jedoch die Gesamtverdampfung, kann man die gesamte Läuterwürzemenge nicht mehr auf die gewünschte Temperatur anheben. Mit der erfindungsgemäßen Ausgestaltung der Energieschaukel des Läuterwürzeerhitzers wird nun die Läuterwürze komplett oder teilweise über das Speichermedium und dem Rücklauf des ersten Wärmeverbrauchers (Hochtemperaturverbraucher) versorgt.

Durch die Aufspaltung der bereits bekannten Energieschaukel aus Pfannendunstkondensator, Würzepfanne und Läuterwürzeerhitzer, kann im Sudhaus ein Wärmeenergieüberschuss entstehen. Dieser Überschuss wird jedoch gewollt, da somit weitere Verbraucher in der Brauerei, insbesondere die Flaschenreinigungsmaschine, versorgt werden können. Somit kann ein ausgeglichener Wärmehaushalt für das Sudhaus auf die gesamte Brauerei erweitert werden.

Der Wärmespeicher ist dabei als Druckspeicher ausgeführt. Durch die Nutzung von rekuperativer Energie bei gleichzeitiger Substitution der Primärenergienutzung kann somit der Wärmeerzeuger, beispielsweise ein Dampf- oder Hochdruckheizwasserkessel, kleiner ausgelegt werden.

Als weiterer Vorteil der Erfindung können die Versorgungsleitungen, Regelorgane, etc. kleiner ausgeführt werden. Zudem werden durch den Wärmespeicher, Lastspitzen am Wärmeerzeuger minimiert, wodurch dieser nahezu kontinuierlich betrieben werden kann. Dadurch reduzieren sich ebenfalls Wartungsarbeiten am Wärmeerzeuger, was gleichzeitig zu einer Verlängerung der Lebensdauer des Wärmeerzeugers führt.

Die Erfindung hat nun auch den Vorteil, dass die im Wärmespeicher vorhandenen mindestens drei Schichten über die Steuerung derart eingestellt werden, dass keine dieser Schichten eine Ausdehnung über einen vordefinierten Schwellwert annimmt. Dies bedeutet, man muss jede Energiemenge auf einem bestimmten Temperaturniveau weiter verwenden und damit das Temperaturniveau weiter absenken, oder man hebt diese mittels Primärenergie direkt wieder auf ein höheres Temperaturniveau an.

Ein weiterer erfindungsgemäßer Gedanke ist, dass am Wärmespeicher eine Kaskadenschaltung zur Aufwärts- und/oder Abwärtsmischung unterschiedlicher Temperaturen vorgesehen wird. Die Ausmischung kann dabei durch Mischventile erfolgen, welche als Wassermischer, Dreiwegeventile oder Regelkappen oder dafür geeignete Vorrichtungen ausgestaltet sind. Hierdurch können unterschiedliche Schichten im Wärmespeicher so zusammengemischt werden, dass etwaige andere Wärmeverbraucher bei entsprechender Auslegung eine möglichst niedrige Rücklauftemperatur bereitstellen.

Durch diese Verfahrensweise wird eine optimierte Nutzung der bereitgestellten Energie in der gesamten Brauerei gewährleistet und gleichzeitig Wärmeverluste und die Speichergröße minimiert.

Ferner wird durch diese Verfahrensweise somit die obere Schicht (die Schicht mit der höchsten Temperatur) geschont und es steht zu jeder Zeit ein ausreichend hohes Temperaturniveau für alle Wärmeverbraucher und auch Wärmeproduzenten zur Verfügung. Ein weiterer Vorteil der Kaskadenschaltung ist, dass die Wärmeverbraucher bzw. Wärmeerzeuger, bevorzugt, mit den spezifischen Temperaturschichten aus den unterschiedlichen Rückläufen zum Wärmespeicher versorgt werden, das heißt, auch verschiedene nachfolgende Wärmeverbraucher mit dem Ziel bedient werden sollten, dass das Speichermedium maximal abkühlt und damit auch das Wärmespeichervolumen und die Verluste maximal reduziert werden. Beispielsweise sollen Rückläufe von der Würzepfanne (< 102°C) in einem nächsten Schritt, beispielsweise zur Läuterwürzeerhitzung, eingesetzt werden. Die Rücklauftemperatur beträgt so beispielsweise <= 80°C.

In einer Erweiterung befinden sich weitere Ausmischvorrichtungen in den Leitungen zur Abholung rekuperativer Energie, um zum Beispiel ein "mittelwarmes" Speichermedium aus nicht optimal ausgelegten Wärmeverbrauchern mit, zum Beispiel, 85°C, direkt wieder auf, zum Beispiel, 98°C anzuheben und um damit auch, volumenmäßig, mehr 98°C heißes Speichermedium über den Rekuperator (zum Beispiel: Pfannendunstkondensator) zu gewinnen bzw. einzustellen.

In einer weiteren Erweiterung ist es möglich, durch Anbindung des Rücklaufs an mehreren Einlagerungsmöglichkeiten im Wärmespeicher, den Rücklauf temperaturgesteuert und damit optimiert, in die dem Rücklauf am besten entsprechende Temperaturschicht, im Schichtenspeicher, einzulagern.

In einer weiteren Ausprägung der Erfindung wird die unterste Schicht derart gehalten bzw. konstruktiv vordefiniert, dass lediglich die Anlagenteile auf die unterste Temperaturschicht zugreifen können, die dieses Temperaturniveau benötigen und/oder liefern. Hierzu werden lediglich diese Wärmeverbraucher mit dem Belademittel der unteren Schicht des Wärmespeichers verbunden. Alle anderen Wärmeverbraucher und/oder Wärmeerzeuger und/oder rekuperative Wärmetauscher werden auf eine oder mehrere andere Belademittel oberhalb der erhaltenden unteren Schicht geführt.

In einer weiteren Ausgestaltung der Erfindung bedarf es zur Aufrechterhaltung der obersten (heißesten) Schicht des Wärmespeichers einer optimierten Steuerung. Um ein nahezu kontinuierliches Nachspeisen des Wärmespeichers bei gleichzeitig weitgehend niedrigem und konstantem Lastgang des Wärmeerzeugers zu erreichen, sind zumindest zwei Sensoren (Temperaturfühler) in einem gewissen, für jeden Anwendungsfall spezifisch zu bestimmenden Abstand, zueinander vorzusehen. Innerhalb des Abstandes der Temperaturfühler ist der untere Bereich der obersten Temperaturschicht auf demselben Niveau zu halten. Erreicht wird dies, in dem sowohl dem oberen, als auch dem unteren Sensor (Temperaturfühler) eine vorzugebende Start- und Stopp-Temperatur vorgegeben wird. Der Energieversorger wird somit bei Unterschreitung der vorgegebenen Mindesttemperatur des oberen Sensors gestartet und spätestens bei Erreichen der oberen maximal erlaubten Temperatur des unteren Sensors gestoppt oder im Wärmestrom reduziert. Mit der Verwendung jeweils einer Start- und Stopp-Temperatur für jeden der Sensoren, welche als Temperaturfühler verwendet werden, wird ein vergrößerter Regelbereich zur Nachspeisung des Wärmespeichers geschaffen. Dadurch ist zum Einen die Steuerung und Nachspeisung leichter regelbar und zum Anderen ist eine bessere Vergleichsmäßigung des Lastgangs am Wärmeerzeuger erreicht. Ähnliches kann mit geringerer Effektivität auch mit nur einer Start-Temperatur für die oberen und einer Stopp-Temperatur für den unteren Sensor erzielt werden. Ebenso ist der Einsatz von mehr oder auch weniger als nur zwei Sensoren zur Steuerung der Nachspeisung denkbar. Somit ergibt sich ein für jeden Anwendungsfall spezifisch einzustellender Temperaturbereich, innerhalb dessen, eine optimale Energiezufuhr aus dem Wärmeerzeuger erfolgt.

In einer bevorzugten Ausführungsform wird bei der Nachspeisung des Wärmespeichers, vorzugsweise, das Speichermedium aus der auf die oberste und damit heißeste Temperaturschicht folgende Zwischenschicht entnommen und auf die Temperatur der obersten Schicht und/oder darüber erwärmt. Dies ermöglicht eine schnellere Bereitstellung einer entsprechend höheren Menge von heißem Speichermedium, gegenüber der Verwendung von kaltem Speichermedium. Zudem werden dadurch Energiespitzen am Wärmeerzeuger sowie Verluste am Wärmespeicher sowie bei der Übertragung reduziert. Diese Verfahrensweise ermöglicht ein kurzfristiges bzw. schnelles Reagieren auf entsprechende Energieanforderungen der Anordnung bzw. der Brauereianlage. Bei Verzicht auf diese Möglichkeit kann der Wärmespeicher komplett aufgeladen werden, was bei Einbindung bestimmter Wärmeerzeuger, wie zum Beispiel Solarthermie, von Vorteil ist. Ferner ist es auch möglich, dass das Speichermedium, welches das erforderliche Temperaturniveau für den Wärmeerzeuger bereits aufweist, direkt am Wärmespeicher vorbei zum Wärmeerzeuger geleitet wird. Zudem ist es auch möglich, eine Mischung aus den genannten Optionen einzusetzen.

Es ist anzumerken, dass, wenn bei der gegenwärtigen Erfindung von einer Anlage zur Getränkeherstellung gesprochen wird, damit auch die Abfüllung und Verpackung von Getränken verstanden wird.

Wenn in der gegenwärtigen Erfindung von einer Brauereianlage oder der Bierherstellung gesprochen wird, so umfasst dies auch die Abfüllung und Verpackung von Bier bzw. die Produkte, welche in der Brauerei hergestellt werden.

Wenn in der gegenwärtigen Erfindung die Rede von einem Wärmetauscher ist, so kann es sich um einen Außenkocher, Innenkocher, einer Boden- und/oder Zargenheizfläche, einem Plattenwärmetauscher oder Rohrbündelwärmetauscher handeln.

Unter dem Speichermedium ist ein Wärmeträger zu verstehen, insbesondere handelt es sich hierbei um Wasser.

Wenn in dieser Erfindung von einer Maischbottichpfanne oder einem Maischbottich die Rede ist, dann ist damit ein über Heizeinrichtungen beheizbares Gefäß, welche im und/oder am Gefäß angebracht sind, zu verstehen, in welchem der Maischprozess abläuft. In einer Maischbottichpfanne werden bevorzugt Teilmaischen oder Rohfruchtmaischen behandelt bzw., auf nahe Kochtemperatur oder auf Kochtemperatur erhitzt und ggf. gekocht. Der Maischbottich fasst die gesamte Maische und kann diese auf übliche Abmaischtemperaturen erwärmen. Weiterhin sind hier auch Kombinationen, wie einer kombinierten Maisch-/Würzepfanne oder einem Maisch-/Läuterbottich enthalten. Der Begriff des Maischgefäßes steht allgemein für eine Gruppe von Gefäßen, in denen der Maischprozess durchgeführt wird und kann somit alle oben aufgezählten Gefäßarten beinhalten.

Im Folgenden sollen Ausführungsbeispiele die Erfindung und ihre Vorteile anhand der beigefügten Figuren näher erläutern. Die Größenverhältnisse der Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- **Figur 1**: eine schematische Darstellung einer Anordnung zur Wärmespeicherung in einer Anlage zur Getränkeherstellung;
- **Figur 2**: eine schematische Darstellung einer Ausführungsform der Anordnung zur Wärmespeicherung in einer Anlage zur Getränkeherstellung;
- **Figur 3**: eine schematische Darstellung der Steuerung der Anordnung zur Wärmespeicherung in einer Anlage zur Getränkeherstellung;
- **Figur 4**: eine Ausführungsform der Erfindung im Einsatz bei einer Brauereianlage;
- **Figur 5**: eine schematische Darstellung der Energieschaukel, bestehend aus Pfannendunstkondensator, Würzepfanne sowie Läuterwürzeerhitzer;
- **Figur 6**: eine schematische Darstellung des erfindungsgemäßen Wärmespeichers mit einer Kaskadenschaltung der Entnahmestellen; und
- **Figur 7**: eine schematische Darstellung des erfindungsgemäßen Wärmespeichers, bei dem das Speichermedium in fünf Zonen eingelagert ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Im Folgenden werden Ausführungsformen einer erfindungsgemäßen Anlage unter Bezugnahme auf die Zeichnung beschrieben. Die beschriebenen Ausführungsformen sind in jeder Hinsicht, lediglich, als illustrativ und nicht als einschränkend anzusehen. Außerdem sind verschiedene Kombinationen der angeführten Merkmale in der Erfindung eingeschlossen. Weiter sei angemerkt, dass in den Figuren und auch in der Beschreibung die zahlreichen für die vorstehend geschilderte Erfindung erforderlichen Stellglieder, Ventile, Pumpen und sonstige Fördereinrichtungen oder Einrichtungen für Mess-, Regelungs- und Steuerungstechnik der Übersichtlichkeit wegen nicht beschrieben und dargestellt sind.

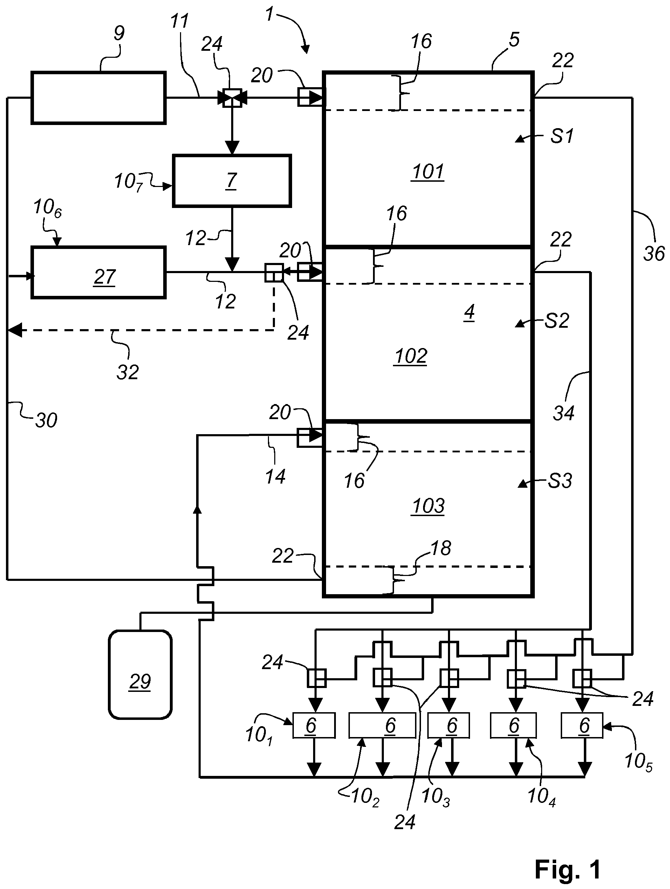

**Figur 1** zeigt eine Ausführungsform der erfindungsgemäßen Anordnung 1 zur Wärmespeicherung in einer Anlage zur Getränkeherstellung. Die Anordnung 1 besitzt einen Wärmespeicher 5. Ferner sind mehrere Wärmeverbraucher 10₁, 10₂, 10₃, ..., 10_{N} vorgesehen, die mit dem Wärmespeicher 5 zur Einspeisung und/oder Entnahme von

Wärmeenergie verbunden sind. Bevorzugt ist das Speichermedium 4 Wasser. Das Speichermedium 4 ist im Wärmespeicher 5 in mehreren Schichten S1, S2, S3, ..., SN in jeweils unterschiedlichen Temperaturbereichen gespeichert. Obwohl bei der in Figur 1 gezeigten Ausführungsform lediglich drei Schichten S1, S2 und S3 dargestellt sind, soll dies nicht als eine Beschränkung der Erfindung aufgefasst werden. Ebenso sind zwischen den Schichten S1 und S2, sowie, zwischen S2 und S3 Trennlinien eingezeichnet, die nur die Abgrenzung der einzelnen Schichten S1, S2 und S3 darstellen sollen. Diese Trennlinien sind nicht als feste mechanische Grenze zwischen den Schichten S1, S2 und S3 zu verstehen. Die Trennlinien deuten an, dass im Wärmespeicher 5 mindestens drei diskrete Schichten S1, S2, S3, ..., SN, vorhanden sind. Der Wärmespeicher 5 ist dabei derart ausgebildet, dass, je nach Bedarf, jede der mindestens drei diskreten Schichten S1, S2, S3, ..., SN mit einem Belademittel im jeweiligen Temperaturbereich, kommunikativ zum temperaturabhängigen Einschichten, verbunden sind. Mit dem Belademittel 20 wird somit der Wärmespeicher 5, in den, entsprechend der jeweiligen Schicht S1, S2, S3, zugeordneten Temperaturbereichen, mit einem Speichermedium 4 beladen.

In dem Wärmespeicher 5, wie in Figur 1 dargestellt, ist eine obere Schicht 101 über das Belademittel 20 mit dem Wärmeerzeuger 9 verbunden. Die obere Schicht 101 (heißeste Schicht) besitzt einen Temperaturbereich über einer Siedetemperatur des Speichermediums 4. Der Temperaturbereich in der oberen Schicht 101 liegt beispielsweise zwischen 105°C bis 130°C und bevorzugt aber zwischen 105°C bis 120°C. In der auf die obere Schicht 101 folgenden Zwischenschicht 102 liegt ein Temperaturbereich zwischen 90°C und 105°C, bevorzugt jedoch zwischen 90°C und der Siedetemperatur des Speichermediums. Bevorzugt liegt der Temperaturbereich der Zwischenschicht 102 zwischen 95°C bis 98°C. Auf die Zwischenschicht 102 folgt die untere Schicht 103. Der Temperaturbereich in der unteren Schicht 103 liegt unter 90°C und bevorzugt in einem Temperaturbereich von 75°C bis 85°C.

Über das der oberen Schicht 101 zugeordnete Belademittel 20 kann das Speichermedium 4 aus einem Wärmeerzeuger 9 in den Wärmespeicher 5 eingeschichtet werden. Über ein Belademittel 20, das der Zwischenschicht 102 zugeordnet ist, kann das Speichermedium 4 aus dem mindestens einen Rücklauf 12 eines rekuperativen Wärmetauschers 27 und eines mindestens ersten Wärmeverbrauchers 7 eingeschichtet werden. Die ersten Wärmeverbraucher 7 sind in der Regel Hochtemperaturverbraucher, die eine Produkttemperatur von >= 95°C aufweisen. Über ein der unteren Schicht 103 zugeordnetes Belademittel 20, kann das Speichermedium 4 aus mindestens einem Rücklauf 14 eines Wärmetauschers (hier nicht dargestellt) eines mindestens zweiten Wärmeverbrauchers 6 eingeschichtet werden. Bei der in Figur 1 gezeigten Ausführungsform sind die Belademittel 20 als Einschichtstellen ausgebildet. Die Einschichtstellen 20 münden in der jeweiligen Schicht S1, S2, S3, ..., SN des Wärmespeichers 5, um dort ein temperaturbestimmtes Einschichten des Speichermediums 4 zu erreichen.

Der oberen Schicht 101, der Zwischenschicht 102 und der unteren Schicht 103 ist jeweils eine Entnahmestelle 22 zugeordnet. Bei der in Figur 1 gezeigten Ausführungsform ist in der oberen Schicht 101 das Belademittel 20 und die Entnahmestelle 22 in einem oberen Bereich 16 der oberen Schicht 101 vorgesehen. In der Zwischenschicht 102 ist ebenfalls das Belademittel 20 und die Entnahmestelle 22 im oberen Bereich 16 der Zwischenschicht 102 vorgesehen. In der unteren Schicht 103 ist das Belademittel 20 im oberen Bereich 16 und die Entnahmestelle 22 im unteren Bereich 18 der unteren Schicht 103 vorgesehen. Es ist für einen Fachmann selbstverständlich, dass die Anordnungen der Belademittel 20 bzw. der Entnahmestellen 22 auch anders als hier dargestellt am Wärmespeicher 5 angeordnet sein können.

Der Wärmespeicher 5 ist als Druckspeicher ausgebildet und die untere Schicht 103 des Wärmespeichers 5 ist vorzugsweise mit einem optionalen Druckausgleichsbehälter 29 kommunikativ verbunden. Der optionale Druckausgleichsbehälter 29 kann alternativ auch in einer Leitung beinhaltet sein, welche mit dem Wärmespeicher 5 kommunikativ verbunden ist. In einer Zuleitung 11 vom Wärmeerzeuger 9 zum Belademittel 20, für die obere Schicht 101, ist ein Mischventil bzw. eine Mischeinrichtung 24 (alternativ kann es sich auch lediglich um eine einfache Anbindung handeln) vorgesehen. Über das Mischventil 24 kann somit der erste Wärmeverbraucher 7 aus dem Wärmeerzeuger 9 und/oder über das Belademittel 20 auch aus der oberen Schicht 101, mit dem Speichermedium 4 versorgt werden. Durch das Mischventil 24 ist es möglich, somit die Temperatur und/oder den Volumenstrom des Speichermediums 4 optimal einzustellen, um einen effektiven Wärmeübergang im Wärmetauscher (hier nicht dargestellt) des ersten Wärmeverbrauchers 7 zu erreichen. Weiterhin ist durch das Mischventil 24 gewährleistet, dass der erste Wärmeverbraucher 7 stets mit der notwendigen Energie aus dem Wärmespeicher 5 und/oder dem Wärmeerzeuger 9 versorgt wird. Weiterhin ist durch das Mischventil 24 gewährleistet, dass der Wärmeerzeuger 9 die Energie kontinuierlich abgeben kann, entweder an den Wärmespeicher 5 und/oder an den ersten Wärmeverbraucher 7. Die Rückläufe 12 aus den ersten Wärmeverbrauchern 7 und dem rekuperativen Wärmetauscher 27 werden über das Belademittel 20 der Zwischenschicht 102 dem Wärmespeicher 5 zugeführt. In dem Rücklauf 12, der von einem der ersten Wärmeverbraucher 7 direkt zum Belademittel 20 führt, ist ebenfalls ein Mischventil 24 vorgesehen. Von dem Mischventil 24 (alternativ kann es sich auch lediglich um eine einfache Anbindung handeln) führt eine Leitung 32 zu einer Leitung 30, die von der Entnahmestelle 22 der unteren Schicht 103 zum Wärmeerzeuger 9 führt. Mit dem Mischventil 24 (alternativ kann es sich auch lediglich um eine einfache Anbindung handeln) ist es somit möglich, das Speichermedium 4 aus den Rückläufen 12 und/oder auch aus der Zwischenschicht 102 der Leitung 32 und somit dem Wärmeerzeuger 9 zuzuführen. Somit kann die obere Schicht 101 im Bedarfsfall zügig erneuert werden, wenn die obere Schicht 101 zuvor stark dezimiert wurde. Durch die Entnahme des Speichermediums 4 aus der Leitung 32, also aus der Zwischenschicht 102, bedarf es im Wärmeerzeuger 9 nur einer geringen Temperaturerhöhung, wodurch sich das Speichermedium 4 zügiger auf das notwendige Temperaturniveau der oberen Schicht 101 erhöhen lässt.

Jedem der zweiten Wärmeverbraucher 6 ist jeweils ein Mischventil 24 zugeordnet. Von einer der obersten Schicht 101 zugeordneten Entnahmestelle 22 führt eine Leitung 36 zu jedem der Mischventile 24. Ebenso führt von der Entnahmestelle 22 der Zwischenschicht 102 eine Leitung 34 zu jedem der Mischventile 24. Durch die Anordnung der Leitungen 34 und 36 sowie der Mischventile 24, ist es möglich, jedem der zweiten Wärmeverbraucher 6 das Speichermedium 4, mit einem für den jeweiligen Prozessschritt optimalen Temperaturniveau, zuzuführen. Die von den zweiten Wärmeverbrauchern 6 ausgehenden Rückläufe 14 werden über das Belademittel 20 der unteren Schicht 103 zugeführt.

In einer der Regel werden die zweiten Wärmeverbraucher 6 aus der Zwischenschicht 102 versorgt, nur wenn entweder die Temperatur und/oder die Wärmemenge aus der Zwischenschicht 102 nicht ausreichend ist, wird Energie aus der oberen Schicht 101 beigemischt. Die gesteuerten Mischventile 24 sorgen für eine Einstellung der erforderlichen Temperatur und/oder die Wärmemenge im laufenden Prozess. Es ist für einen Fachmann selbstverständlich, dass die Zwischenschicht 102 nur gemeint ist, wenn es sich um drei Schichten S1, S2 und S3 im Wärmespeicher 5 handelt. Bei mehr als drei Schichten im Wärmespeicher 5 ist mit der Zwischenschicht 102 die zweithöchste Schicht S2 gemeint. Die rekuperativen Wärmetauscher 27 der Anordnung 1 sind über deren Rückläufe 12 mit der Zwischenschicht 102 verbunden und lagern dort in den Wärmespeicher ein. Durch die Ausbildung der mindestens drei Schichten S1, S2 und S3, erreicht man für den Betrieb der Anordnung 1 eine optimale Spreizung des Temperaturniveaus im Wärmespeicher 5. Entscheidend hierbei ist, dass die obere Schicht 101 "eine Hochtemperaturschicht" ist. Bevorzugt ist das Temperaturniveau in der oberen Schicht 101 zwischen 105°C bis 120°C. Der Rücklauf 12 von dem mindestens einen ersten Verbraucher 7, die Produkttemperaturen von >= 95°C aufweisen, wird direkt in die Zwischenschicht 102 eingelagert, die unter der oberen Schicht 101 angeordnet ist. In der Zwischenschicht 102 liegt das Temperaturniveau, besonders bevorzugt, zwischen 95°C bis 98°C. Das Speichermedium 4 in den Rückläufen 14, aus den zweiten Wärmeverbrauchern 6, ist dabei derart weit abgekühlt, dass das Speichermedium 4 hier in die untere Schicht 103 eingelagert werden kann. Das Temperaturniveau der unteren Schicht 103 liegt bevorzugt zwischen 75°C bis 85°C.

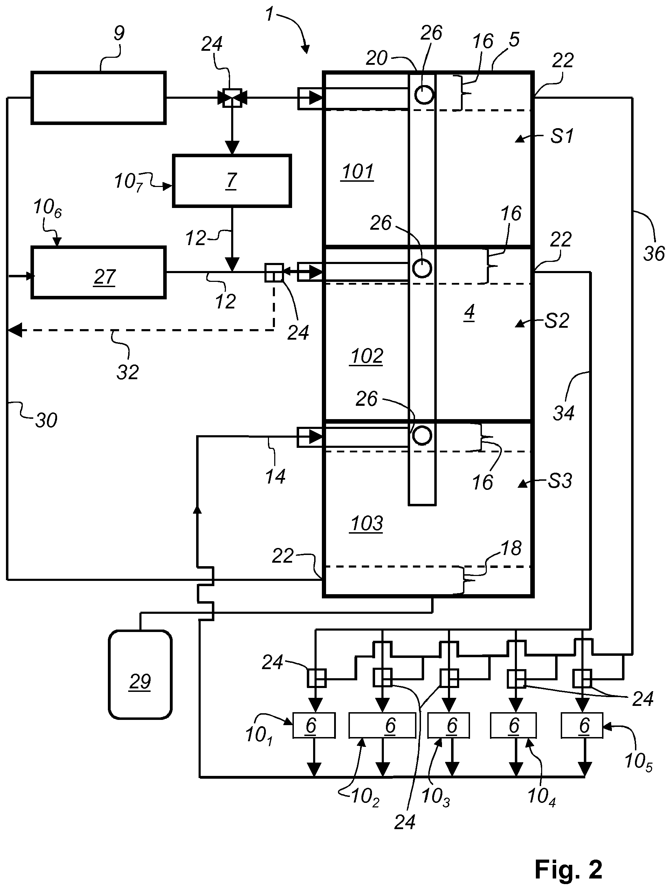

In **Figur 2** ist eine weitere Ausführungsform der Anordnung 1 dargestellt. Alle Elemente der Figur 2 sind bereits in der Figur 1 beschrieben worden, deshalb wird hier auf eine erneute Beschreibung verzichtet. Figur 2 unterscheidet sich von dem Ausführungsbeispiel in Figur 1 dadurch, dass das Belademittel 20 als mindestens eine Schichtlanze 20 ausgebildet ist. Die mindestens eine Schichtlanze 20 ist dabei mit Öffnungen 26 versehen, die der oberen Schicht 101, der Zwischenschicht 102 bzw. der unteren Schicht 103 zugeordnet sind, um somit ein temperaturgenaues Einschichten des Speichermediums 4 in die jeweilige der drei Schichten 101, 102, 103 zu erzielen.

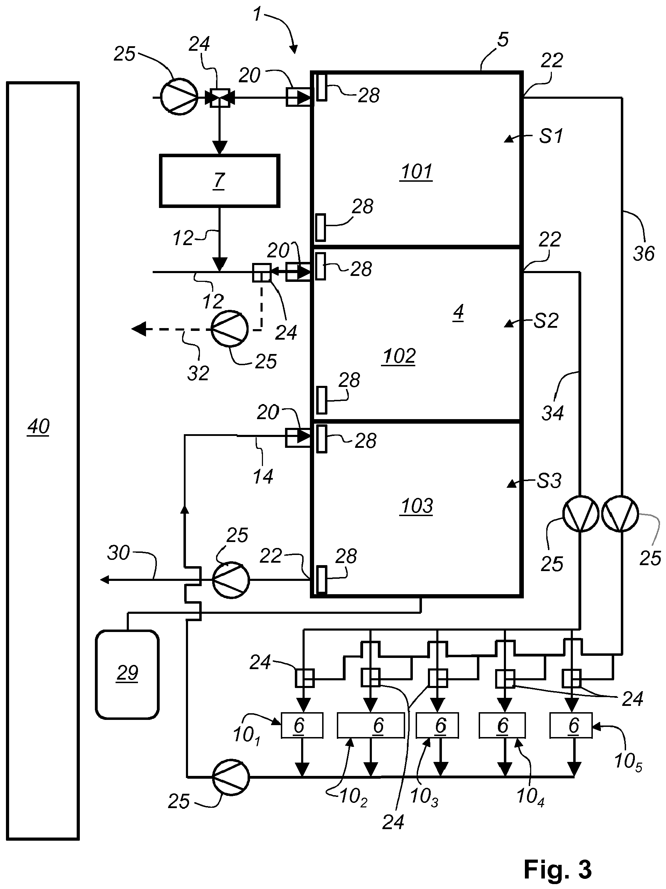

**Figur 3** zeigt eine Steuerung 40, mit der die Volumenströme des Speichermediums 4 innerhalb der Anordnung 1 derart optimal gesteuert werden, dass sich in der obersten Schicht 101 die heißeste Temperaturschicht im Wärmespeicher 5 ausbildet. Ebenso soll mit der Steuerung 40 eine schnelle Bereitstellung von heißem Speichermedium 4 für den Wärmeerzeuger 9 (nicht dargestellt, siehe Figur 1) ermöglicht werden, so dass dadurch Energiespitzen oder Verluste am Wärmespeicher 5 bei der Übertragung reduziert werden können. Der Übersicht halber ist nur ein Teil der Anordnung 1 dargestellt. In der Leitung 36 aus der Entnahmestelle 22 der oberen Schicht 101, in der Leitung 34 der Entnahmestelle 22 der Zwischenschicht 102 und in der Leitung 30 der Entnahmestelle 22 der unteren Schicht 103 ist zur Verdeutlichung jeweils eine Pumpe 25 vorgesehen. Alternativ können die Pumpen 25 auch so angeordnet sein, dass sie das Speichermedium 4 zum jeweiligen zweiten Wärmeverbraucher 6 bzw. ersten Wärmeverbraucher 7 saugen. Ebenso ist in dem Rücklauf 14 der zweiten Wärmeverbraucher 6 eine Pumpe 25 vorgesehen. Auch in der Leitung 30, die über den Wärmeerzeuger 9 (nicht dargestellt, siehe Figur 1) zum Belademittel 20 der oberen Schicht 101 führt, kann eine Pumpe 25 vorgesehen sein. In der Leitung 32, welche zur Leitung 30 führt, die letztendlich im Wärmeerzeuger 9 (nicht dargestellt, siehe Figur 1) endet, kann eine Pumpe 25 eingebracht sein. Über die Steuerung 40, die mit den Pumpen 25 verdrahtet bzw. drahtlos kommuniziert, kann somit der Volumenstrom vom Speichermedium 4 nach den Bedürfnissen der Anlage 1 eingestellt werden. Ebenso sind sämtliche Mischventile 24 der Anordnung 1 mit der Steuerung 40 kommunikativ verbunden. Durch die Mischventile 24 in Zusammenwirkung mit den Pumpen 25 kann somit der Volumenstrom des Speichermediums 4 optimiert werden, um letztendlich auch den Energieverlust der Anordnung 1 so gering wie möglich zu halten.

Die Steuerung 40 ist ebenfalls mit mindestens einem Sensor 28 des Wärmespeichers 5 kommunikativ verbunden. Mit dem mindestens einen Sensor 28 kann somit die räumliche Ausdehnung, das heißt die Schichtdicke, von jeder der drei Schichten S1, S2 und S3 im Wärmespeicher 5 ermittelt bzw. überwacht werden. Bei mehr als drei Schichten S1, S2, S3, ..., SN wird mit einer entsprechenden Anzahl von Sensoren 28 deren räumliche Ausdehnung, sprich die Schichtdicke, überwacht. Mit der Steuerung 40 ist es somit möglich, die oberste (heißeste) Schicht 101 des Wärmespeichers 5 aufrecht zu erhalten. Ebenso ist es somit mit der Steuerung 40 möglich, die räumliche Ausdehnung der mindestens drei Schichten zu ermitteln und einen Zufluss über die Belademittel 20 und eine Entnahme an den Entnahmestellen 22 derart zu steuern, dass jede der Schichten S1, S2 und S3 mit den jeweils zugeordneten Belademitteln 20 bzw. den Entnahmestellen 22 verbunden bleibt. Mit der Steuerung 40, die mit den Sensoren 28, den Pumpen 25 und den Mischventilen 24 kommunikativ verbunden ist, kann somit die Steuerung der gesamten Anordnung 1 bzw. auch die Nachspeisung des Wärmespeichers 5 leicht regelbar sein, was auch zu einer besseren Vergleichmäßigung des Lastgangs am Wärmeerzeuger 9 führt. Die Steuerung 40 ist in einer besonderen Ausprägung so eingestellt, dass stets die zweiten Wärmeverbraucher 6 über die die Zwischenschicht 102 bzw. über die zweite höchste Schicht S2 versorgt werden. Nur wenn diese nicht ausreicht, wird über die obere Schicht 101 bzw. erste Schicht S1 dem zweiten Wärmeverbraucher 6 das Speichermedium 4 zugeführt. Weiterhin kann zur schnellen Erhöhung der Temperatur in der obere Schicht 101 bzw. ersten Schicht S1, dem Wärmeerzeuger 9 aus der Zwischenschicht 102 bzw. der zweiten Schicht S2 das Speichermedium 4 zugeführt werden.

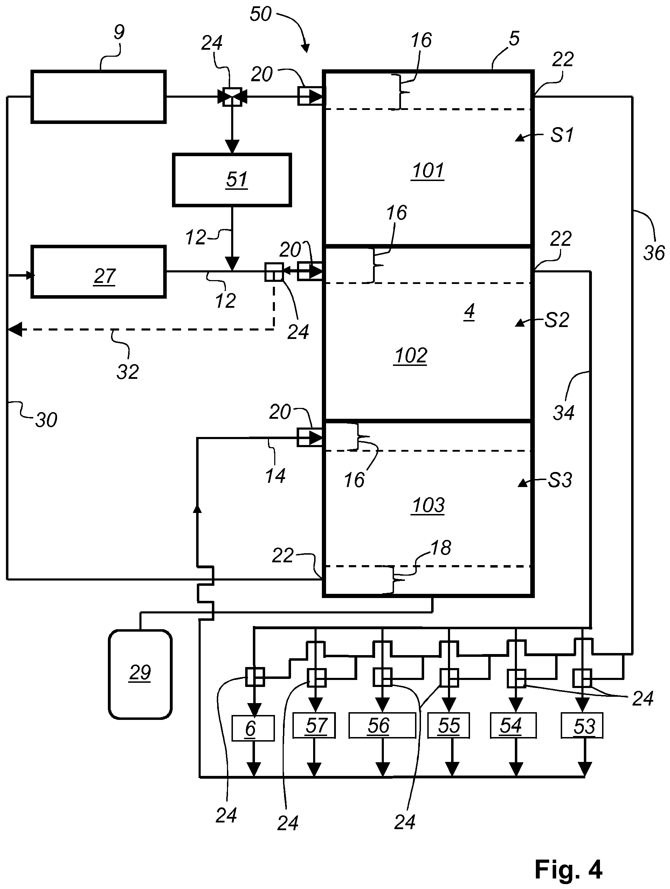

**Figur 4** zeigt eine Ausführungsform der erfindungsgemäßen Anordnung 1, die hier als Brauereianlage 50 schematisch dargestellt ist. Die Brauereianlage 50 ist mit einem Wärmespeicher 5 versehen. Der Wärmeerzeuger 9 ist dabei mit dem Wärmespeicher 5 verbunden. Mindestens ein rekuperativer Wärmetauscher 27, hier der Pfannendunstkondensator 52, ist über den Rücklauf 12 mit dem Wärmespeicher 5 kommunikativ verbunden. Eine Würzekoch- und/oder Würzeheißhalteeinrichtung 51, insbesondere einer Würzepfanne, alternativ können beispielhaft auch kombinierte Maisch-/ Würzepfannen, Whirlpoolpfannen oder Heißhaltestrecken, in Frage kommen. Eine Heißhaltestrecke kommt insbesondere bei kontinuierlichen Würzekoch- und/oder Würzeheißhalteverfahren in Betracht. Ein Läuterwürzeerhitzer 53, eine Maischbottichpfanne 54, ein Maischbottich 55, eine Flaschenreinigungsmaschine 56, eine CIP-Anlage 57 und weitere zweite Wärmeverbraucher 6 sind über die entsprechend zugeordneten Rückläufe 12 bzw. 14, der den Elementen jeweils zugeordneten Wärmetauschern (hier nicht dargestellt), kommunikativ verbunden. Bei der hier dargestellten Ausführungsform ist der Würzekoch- und/oder Würzeheißhalteeinrichtung 51 vorzugsweise ein Mischventil 24 vorgeschaltet, so dass dem Wärmetauscher (hier nicht dargestellt) der Würzekoch- und/oder Würzeheißhalteeinrichtung 51 ein Speichermedium 4 aus dem Wärmeerzeuger 9 und/oder aus der oberen Schicht 101 des Wärmespeichers 5 zuführbar ist. Der Rücklauf der Würzekoch- und/oder Würzeheißhalteeinrichtung 51 und des Pfannendunstkondensators 52 sind über ein Belademittel 20 des Wärmespeichers 5 der Zwischenschicht 102 zuführbar. Dem Läuterwürzeerhitzer 53, der Maischbottichpfanne 54, dem Maischbottich 55, der Flaschenreinigungsmaschine 56, der CIP-Anlage 57 und weiteren zweiten Wärmeverbrauchern 6 ist jeweils ein Mischventil 24 vorgeschaltet, so dass den jeweiligen Elementen das Speichermedium 4 über die Entnahmestellen 22 aus der oberen Schicht 101 und/oder der Zwischenschicht 102 des Wärmespeichers 5 zuführbar ist. Die Rückläufe 14 der jeweiligen Elemente sind der unteren Schicht 103 des Wärmespeichers über ein Belademittel 20 zuführbar.

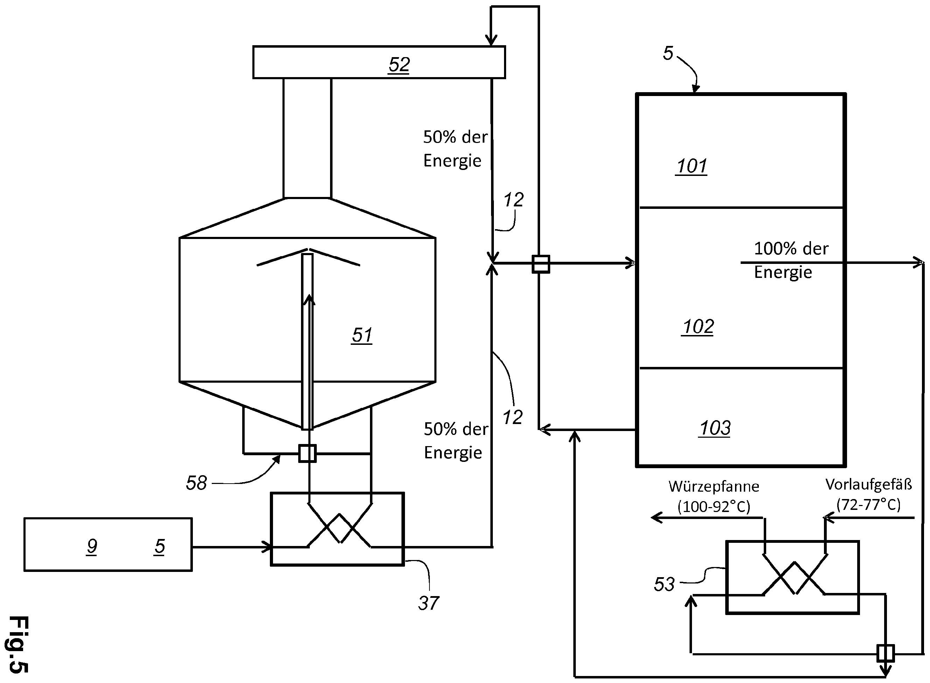

Wie aus der **Figur 5** ersichtlich, ist der Würzekoch- und/oder Würzeheißhalteeinrichtung 51 der Außenkocher 37 (Wärmetauscher) zugeordnet. Der Pfannendunstkondensator 52 ist mit der Würzekoch- und/oder Würzeheißhalteeinrichtung 51 verbunden. Bei der erfindungsgemäßen Brauereianlage 50 ist der Rücklauf 12 aus dem Außenkocher 27 der Würzekoch- und/oder Würzeheißhalteeinrichtung 51 und der Rücklauf 12 aus dem Pfannendunstkondensator 52 mit der Zwischenschicht 102 des Wärmespeichers 5 verbunden. Auch hier können in der Brauereianlage 50, wie in Figur 3 gezeigt, mehrere Sensoren 28 vorgesehen sein, die in Zusammenwirkung mit der Steuerung 40 die räumliche Ausdehnung der mindestens drei Schichten S1, S2, S3,...,SN ermitteln. Entsprechend dem Ermittlungsergebnis kann somit über die Steuerung 40 ein Zufluss über die Belademittel 20 und eine Entnahme an den Entnahmestellen 22 derart gesteuert werden, dass jede der Schichten S1, S2 und S3 mit den jeweils zugeordneten Belademitteln 20 bzw. den Entnahmestellen 22 verbunden bleibt. Dies ist wichtig, damit sich aufgrund des Befüllens des Wärmespeichers 5 bzw. der Entnahme aus dem Wärmespeicher 5 die diskreten Schichten S1, S2 und S3 nicht durchmischen bzw. in ihrer Lage und Ausdehnung nicht unwesentlich verändert werden. Ferner ist die Steuerung 40 vorzugsweise mit den Mischventilen 24 verbunden, um die Temperatur des Außenkochers 27, der Würzekoch- und/oder Würzeheißhalteeinrichtung 51, des Pfannendunstkondensators 52, des Läuterwürzeerhitzers 53, der Maischbottichpfanne 54, des Maischbottichs 55, der Flaschenreinigungsmaschine 56, der CIP-Anlage 57 und der weiteren zweiten Wärmeverbraucher 6 zugeführten Speichermediums 4 einzustellen.

Gemäß der erfindungsgemäßen Brauereianlage 50 kann somit auch die rekuperative Energie unter anderem aus dem Pfannendunstkondensator 52 und/oder einem Würzekühler (nicht dargestellt) und/oder einem Würzevorkühler (nicht dargestellt) und/oder einem Maischekühler (nicht dargestellt) gewonnen werden. Weiterhin kann auch die rekuperative Energie aus der Abwärme von Kompressoren (nicht dargestellt) und aus den biochemischen und thermischen Energiegehalt von Brauereireststoffen und ähnlichem gewonnen werden.

Figur 5 zeigt eine erfindungsgemäße Ausführungsform einer Energieschaukel, bestehend aus dem Pfannendunstkondensator 52 und der Würzekoch- und/oder Würzeheißhalteeinrichtung 51, sowie dem Läuterwürzeerhitzer 53, die so bei der erfindungsgemäßen Brauereianlage 50 Anwendung findet. Die Würzekoch- und/oder Würzeheißhalteeinrichtung 51 wird über einen Außenkocher 37 mit der für die Würzekochung und/oder Würzeheißhaltung erforderlichen Wärmeenergie versorgt. Im Zusammenhang mit der Würzekoch- und/oder Würzeheißhalteeinrichtung 51 wird ein Außenkocher 37 genannt, es versteht sich, dass die Erfindung nicht auf einen Außenkocher 37 beschränkt ist. Es können außerdem ein Innenkocher und/oder eine Boden- und/oder Zargenheizfläche zum Einsatz kommen.

Der Außenkocher 37 wird dabei mit dem erhitzten Speichermedium 4 aus dem Wärmeerzeuger 9 und/oder aus dem Wärmespeicher 5 versorgt. Der Wärmeinhalt des Speichermediums 4 wird im Außenkocher 37 an ein zur Würzekoch- und/oder Würzeheißhalteeinrichtung 51 führendes Leitungssystem 58 (welches mit Würze befüllt ist) abgegeben. Die aus dem Wärmeerzeuger 9 und/oder dem Wärmespeicher 5 kommende Temperatur des Speichermediums 4, welches zum Außenkocher37 geführt wird, soll dabei den Inhalt der Würzekoch- und/oder Würzeheißhalteeinrichtung 51 nahe der Kochtemperatur oder darüber hinaus erhitzen können.

Durch die Entkopplung dieser Energieschaukel kann trotz einer Reduzierung der Gesamtverdampfung bei der Würzekochung, die gesamte Läuterwürze auf das notwendig hohe Temperaturniveau angehoben werden. Dabei wird weiterhin ein ausgeglichenes Energiekonzept ermöglicht. Da das Speichermedium 4 für die Aufheizung der Läuterwürze aus der Zwischenschicht 102 des Wärmespeichers 5 entnommen wird, ergibt sich der Vorteil, dass die Läuterwürze auf ein höheres Temperaturniveau gebracht werden kann, als bei einer "klassischen" Verwendung der Energieschaukel zwischen Pfannendunstkondesator, Würzepfanne und Läuterwürzeerhitzer (siehe Beschreibung weiter unten). Ebenso wird die Belegungszeit in der Würzekoch- und/oder Würzeheißhalteeinrichtung 51 verkürzt. Ebenso führt eine Entkopplung dieser Energieschaukel zu einer höheren Variabilität in der Verfahrensweise bei der Würzekochung. Bei der bisher aus dem Stand der Technik bekannten Energieschaukel werden etwa 4% Gesamtverdampfung benötigt, um mit der Brüdenenergie aus der Würzekochung die komplette Läuterwürze auf etwa 92°C zu erhitzen.

Bei der erfindungsgemäßen Energieschaukel wird die Läuterwürze beispielhaft, aus einem Vorlaufgefäß kommend, in dem Läuterwürzeerhitzer 53 von beispielhaft 77°C auf 100°C aufgeheizt und der Würzekoch- und/oder Würzeheißhalteeinrichtung 51 zugeführt. Der Rücklauf 12 aus dem Läuterwürzeerhitzer 53 wird der unteren Schicht 103 des Wärmespeichers 5 zugeführt. Von hier aus gelangt das Speichermedium 4 wiederum (mit einem definierten Temperaturinhalt) zum Pfannendunstkondensator 52. Im Pfannendunstkondensator 52 geht die Brüdenenergie aus der Würzekochung auf das Speichermedium 4 über. Der Rücklauf 12 aus dem Pfannendunstkondensator 52 und der Rücklauf 12 aus dem Außenkocher37 der Würzekoch- und/oder Würzeheißhalteeinrichtung 51 werden der Zwischenschicht 102 des Wärmespeichers 5 zugeführt und ergeben zusammen die Energie- und Volumenmenge des Speichermediums 4, welche zur Erhitzung des nachfolgenden Sudes im Läuterwürzeerhitzer 53 benötigt wird.

Bisher wurden 4% Gesamtverdampfung benötigt, um aus der Brüdenenergie, die bisher aus dem Stand der Technik bekannte Energieschaukel, zu bedienen. Bei der in Figur 5 gezeigten erfindungsgemäßen Anordnung reichen nun 2% der Gesamtverdampfung aus der Würzekoch- und/oder Würzeheißhalteeinrichtung 51 aus (entspricht somit 50% der benötigten Energie), um die Energieschaukel zu bedienen, die übrigen 2% werden aus dem Energieinhalt des Rückflusses aus dem Außenkocher 37 der Würzekoch- und/oder Würzeheißhalteeinrichtung 51 gewonnen (entspricht somit 50% der benötigten Energie). Die oben genannte Verfahrensweise von jeweils 50% ist nur beispielhaft und soll der Verdeutlichung dienen. Es versteht sich von selbst, dass dieses Verhältnis und somit auch die Gesamtverdampfung variabel bestimmt werden kann.

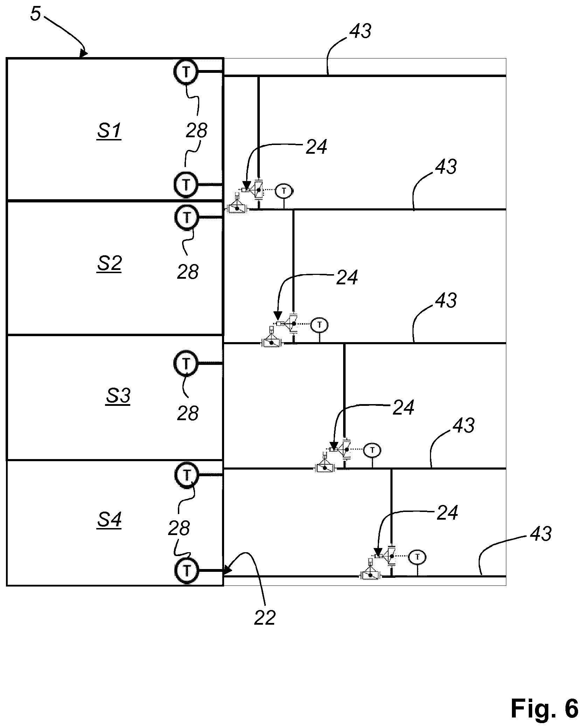

**Figur 6** zeigt eine weitere Ausführungsform des Wärmespeichers 5. Bei der hier dargestellten Ausführungsform umfasst der Wärmespeicher 5 vier Schichten S1, S2, S3 und S4, in denen das Speichermedium 4 in unterschiedlichen Temperaturbereichen eingelagert bzw. gespeichert ist.

Selbstverständlich könnte man alle Wärmeverbraucher 6 und 7 der Anordnung 1 mit der oberen Schicht S1 versorgen. In diesem Fall müsste aber diese Schicht sehr groß sein, da die Rückläufe 12 und 14 von den Wärmeverbrauchern 6 und 7 größtenteils ein hohes Temperaturniveau (zum Beispiel 80°C) hätten. Die Verluste bei der Wärmeerzeugung und Verteilung sind außerdem größer. Bei der in Figur 6 gezeigten Darstellung, ist eine vorteilhafte Kaskadenschaltung zur Abwärtsmischung des Speichermediums 4 aus unterschiedlichen Temperaturen, die aus unterschiedlichen Schichten S1, S2, S3 und S4 kommen, gezeigt. Die aus der ersten Schicht S1 und der zweiten Schicht S2 führenden Leitungen 43 sind über ein Mischventil 24 miteinander gekoppelt. Ebenso ist die Leitung 43 aus der zweiten Schicht S2 mit einer Leitung 43 aus der dritten Schicht S3 über ein Mischventil 24 gekoppelt. Die Leitung 43 aus der dritten Schicht S3 ist mit einer Leitung 43 aus der vierten Schicht S4 über ein Mischventil 24 gekoppelt. Ebenso ist eine obere Leitung 43 aus der vierten Schicht S4, über ein Mischventil 24, mit einer unteren Leitung 43 aus der vierten Schicht S4 gekoppelt. Um, zum Beispiel, den Maischprozess mit thermischer Energie zu versorgen, wird das Speichermedium 4 (zum Beispiel: Wasser) aus der vierten Schicht S4 des Wärmespeichers 5 auf ca. 80°C gemischt und, zum Beispiel, dem Würzekühler (nicht dargestellt) zugeführt. Am Würzekühler (nicht dargestellt) wird das Wasser auf ca. 95° C aufgeheizt und in die dritte Schicht S3 des Wärmespeichers 5 eingelagert. Alternativ und/oder zusätzlich kann auch dem Pfannendunstkondensator 52 das Speichermedium 4 aus der vierten Schicht S4 zugeführt werden, welches dann wiederum in der dritten Schicht S3 des Wärmespeichers 5 eingelagert wird. Aus der dritten Schicht S3 kann nun das Speichermedium 4 als Heizmedium dem Maischprozess zugeführt werden (somit wird eine Energieschaukel geschaffen). Die unterste Entnahmestelle 22 der vierten Schicht S4 dient als Reserveschicht, beispielsweise für den Würzekühler, so dass immer eine genügend große Schicht mit vorzugsweise 80°C warmen Wasser im Wärmespeicher 5 vorhanden ist, um die hochwertige Energie beim Würzekühlen zu rekuperieren. Die so rekuperierte Energiemenge wird, beispielsweise und wie bereits erwähnt, am Maischbottich (nicht dargestellt) zum Aufheizen der Maische genutzt. In der ersten Schicht S1 wird das Speichermedium 4 mit einer Temperatur von ca. 115°C vorgehalten und zur Versorgung der Würzekochung eingesetzt. Der Rücklauf 12 und 14 des Außenkochers 37, der ca. 105°C aufweist, wird in die zweite Schicht S2 eingelagert und für eine anschließende Erhitzung der Läuterwürze eingesetzt. Der Rücklauf 12 und 14 des Läuterwürzeerhitzers beträgt ca. 80°C und wird in die vierte Schicht S4 eingelagert. Eine ähnliche Verschaltung und Nutzung der Temperaturbereiche in den einzelnen Schichten S1, S2, S3, S4 des Wärmespeichers 5 kann auch mit weiteren Verbrauchern und Wärmeerzeugern erzielt werden.

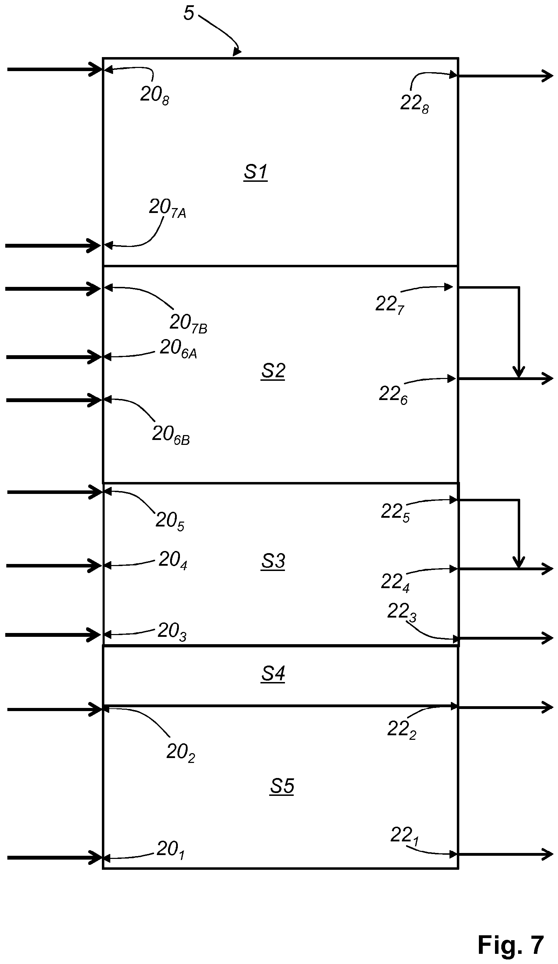

**Figur 7** zeigt eine weitere Ausführungsform des Wärmespeichers 5, der bei der erfindungsgemäßen Anordnung 1 eingesetzt wird. Der Wärmespeicher 5 besteht dabei aus fünf Schichten S1, S2, S3, S4 und S5. In der ersten Schicht S1 liegt das Speichermedium 4 beispielsweise mit einer Temperatur von 115°C vor. In der zweiten Schicht S2 liegt das Speichermedium 4 mit einer Temperatur von > 105°C vor. In der dritten Schicht S3 liegt das Speichermedium 4 mit einer Temperatur von >95°C vor. In der vierten Schicht S4 und der fünften Schicht S5 liegt das Speichermedium 4 jeweils mit einer Temperatur von >= 75°C vor. In der fünften Schicht S5 wird dabei zu jedem Zeitpunkt das Speichermedium 4 mit einer Temperatur von >= 75°C vorgehalten. Es handelt sich bei dieser Ausgestaltung lediglich um eine beispielhafte Ausführung, so dass prinzipiell auch eine Schicht ausreichen würde, in der das Speichermedium 4 mit einer Temperatur von >= 75°C vorgehalten wird.

Bei dem hier gezeigten Wärmespeicher 5 dient die Einschichtstelle 20s zum Einlagern des 115°C warmen Speichermediums 4, das vom Wärmeerzeuger 9 (nicht dargestellt) kommt. Die Entnahmestelle 22₈ der ersten Schicht S1 dient zum Auslagern des ca. 115°C heißen Speichermediums 4 zu den Hochtemperaturverbrauchern. Die Einschichtstellen 20_{7A} der ersten Schicht 1 und die Einschichtstelle 20_{7B} der zweiten Schicht S2 dienen zum Einlagern des 105°C warmen Speichermediums 4, das zum Beispiel vom Rücklauf 12 und 14 der Würzekoch- und/oder Würzeheißhalteeinrichtung 51 kommt. Die Entnahmestelle 22₇ der zweiten Schicht S2 dient zum Auslagern des 105°C warmen Speichermediums 4 zum Läuterwürzeerhitzer 53 und zur Flaschenreinigungsmaschine 56. Die Einschichtstelle 20_{6A} und 20_{6B} der zweiten Schicht S2 dienen als Reserveeinschichtstellen. Ebenso dient die Entnahmestelle 22₆ als Reserveentnahmestelle. Dies kann notwendig werden, falls sich die erste Schicht S1 in ihrem Volumen in axialer Richtung des Wärmespeichers 5 vergrößert, so dass damit letztendlich die Einlagerung über die Einschichtstellen 20_{6A} bzw. 20_{6B} und die Auslagerung über die Entnahmestelle 22₆ erfolgen muss.

Die Einschichtstelle 20₅ der dritten Schicht S3 dient zum Einlagern des rekuperativ erzeugten 95°C warmen Speichermediums 4 aus der Würzekühlung und des Pfannendunstkondensators 52. Die Entnahmestelle 22₅ dient zum Auslagern des 95°C warmen Speichermediums 4 zu den Maischgefäßen. Die Einschichtstelle 20₄ dient zum Einlagern des Rücklaufs 12 von den Maischgefäßen, falls die Temperatur des Speichermediums 4 den Sollwert überschreitet und nicht in die Einschichtstelle 20₃ oder 20₁ eingelagert werden kann. Die Entnahmestelle 22₄ ist eine Reserveentnahmestelle für die Entnahmestelle 22₅ und wird dann verwendet, falls die erste Schicht mit dem 115°C heißen Speichermedium 4 vergrößert werden soll. Die Einschichtstelle 20₃ dient zum Einlagern des Rücklaufs 12 der Maischgefäße, falls die Rücklauftemperatur zu gering ist, um in die Einschichtstelle 20₄ geführt zur werden.

Die Entnahmestelle 22₂ dient zur Entnahme von 80 °C warmen Speichermediums 4, um dieses zum Wärmeerzeuger 9 zu führen. Ebenso dient die Einschichtstelle 20₂ zum Einlagern des Rücklaufs 12 aus der Flaschenreinigungsmaschine 56 (siehe Fig. 3). Die Entnahmestelle 22₁ dient zur Entnahme von 80°C warmen Speichermediums 4 zur Rekuperation der Energie am Würzekühler und am Pfannendunstkondensator 52 (siehe Fig. 3). Die Einschichtstelle 20₁ dient zum Einlagern des Rücklaufs 12 vom Läuterwürzeerhitzer 53, den Maischgefäßen und der CIP-Anlage 57 (siehe Fig. 3) bzw. dessen Wärmetauscher 27. Die in der Beschreibung zu Figur 7 erwähnten Einschichtstellen können ebenfalls mit mindestens einer Lanze verschaltet werden.

Wenn in den vorstehenden Figuren beispielhaft von einer Entnahmestelle 22 und Einschichtstelle 20 auf gleicher Schichthöhe des Wärmespeichers 5 gesprochen wird, kann es sich hierbei auch um eine kombinierte Entnahme- und Einschichtstelle handeln, wie zum Beispiel, einer Schichtladelanze.

Die erfindungsgemäße Anordnung ist bei einer Brauereianlage 50 derart ausgestaltet, dass ein Wärmespeicher 5 mit einem Wärmeerzeuger 9, mindestens einem rekuperativen Wärmetauscher 27 und einer Würzekoch- und/oder Würzeheißhalteeinrichtung 51, über mindestens einen Rücklauf 12 verbunden ist. Der Würzekoch- und/oder Würzeheißhalteeinrichtung 51 ist ein Speichermedium 4 aus dem Wärmeerzeuger 9 und/oder aus einer oberen Schicht 101 des Wärmespeichers 5 zuführbar. Der Rücklauf 12 der Würzekoch- und/oder Würzeheißhalteeinrichtung 51 ist einer Zwischensicht 102 des Wärmespeichers 5 über ein Belademittel 20 zuführbar. Der Brauereianlage 50 kann zusätzlich zumindest ein Element aus der Gruppe von Maischbottichpfanne 54, Maischbottich 55, Flaschenreinigungsmaschine 56, ein Läuterwürzeerhitzer 53, eine CIP-Anlage 57 und weitere zweite Wärmeverbraucher 6 zugeordnet sein. Dadurch kann das Speichermedium 4 über Entnahmestellen 22 aus der oberen Schicht 101 und/oder der Zwischensicht 102 des Wärmespeichers 5, den Elementen der vorgenannten Gruppe zuführt werden. Die Rückläufe 14 der Elemente der vorgenannten Gruppe können der unteren Schicht 103 des Wärmespeichers 5 über das Belademittel 20 zuführt werden.

Zwischen der oberen Schicht 101 und der unteren Schicht 103 kann im Wärmespeicher 5 ein Temperaturbereich von 150°C bis 70°C vorherrschen. Die obere Schicht 101 weist ein Temperaturniveau von 105°C bis 130°C, bevorzugt von 105°C bis 120°C, auf. Die Zwischenschicht 102 weist ein Temperaturniveau von 90°C bis mindestens zur Siedetemperatur des Speichermediums 4, bevorzugt von 95°C bis 98°C, auf. Die untere Schicht 103 weist ein Temperaturniveau unter 90°C, bevorzugt von 75°C bis 85°C, auf.

Der Würzekoch- und/oder Würzeheißhalteeinrichtung 51 ist der rekuperative Wärmetauscher 27 zugeordnet. Der Rücklauf 12 aus dem rekuperativen Wärmetauscher 27 und der Rücklauf 12 der Würzekoch- und/oder Würzeheißhalteeinrichtung 51 sind mit der Zwischenschicht 102 des Wärmespeichers 5 verbunden.

Die Brauereianlage 50 ist mit einer Steuerung 40 versehen, die mit Sensoren 28 verbunden ist, die die räumliche Ausdehnung der mindestens drei Schichten S1, S2, S3 ermitteln und einen Zufluss über die Belademittel 20 und eine Entnahme an Entnahmestellen 22 steuern, so dass jede der Schichten S1, S2, S3 mit den jeweils zugeordneten Belademitteln 20 bzw. den Entnahmestellen 22 verbunden bleibt. Die Steuerung 40 ist ebenfalls mit den Mischventilen 24 verbunden, um die Temperatur des Speichermediums 4 einzustellen, das zumindest einem der Elemente aus der Gruppe von Würzekoch- und/oder Würzeheißhalteeinrichtung 51, Läuterwürzeerhitzer 53, Maischbottichpfanne 54, Maischbottich 55, Flaschenreinigungsmaschine 56, CIP-Anlage 57 und weiteren zweiten Wärmeverbrauchern 6 zuführbar ist.

Die Erfindung wurde unter Bezugnahme auf bevorzugte Ausführungsbeispiele beschrieben. Es ist jedoch für einen Fachmann selbstverständlich, dass Abwandlungen und Änderungen gemacht werden können, ohne dabei den Schutzbereich der nachstehenden Ansprüche zu verlassen.

### Bezugszeichenliste

- 1: Anordnung
- 4: Speichermedium
- 5: Wärmespeicher
- 6: zweite Wärmeverbraucher
- 7: erster Wärmeverbraucher (Hochtemperaturverbraucher)
- 9: Wärmeerzeuger
- 10₁, 10₂, 10₃,...,10_{N}: Wärmeverbraucher
- 11: Leitung
- 12: Rücklauf
- 14: Rücklauf
- 16: oberer Bereich
- 18: unterer Bereich
- 20: Belademittel
- 20₁ - 20₈: Einschichtstelle
- 22: Entnahmestelle
- 22₁ - 22₈: Entnahmestelle
- 24: Mischventil, Mischeinrichtung
- 25: Pumpe
- 26: Öffnung
- 27: rekuperativer Wärmetauscher
- 28: Sensor
- 29: Druckausgleichsbehälter
- 30: Leitung
- 32: Leitung
- 34: Leitung
- 36: Leitung
- 37: Wärmetauscher, Außenkocher
- 40: Steuerung
- 43: Leitung
- 50: Brauereianlage
- 51: Würzekoch- und/oder Würzeheißhalteeinrichtung
- 52: Pfannendunstkondensator
- 53: Läuterwürzeerhitzer
- 54: Maischbottichpfanne
- 55: Maischbottich
- 56: Flaschenreinigungsmaschine
- 57: CIP-Anlage
- 58: Leitungssystem
- 101: obere Schicht
- 102: Zwischenschicht
- 103: untere Schicht
- S1, S2,..., SN: diskrete Schichten des Speichermediums

## Patentansprüche

1. Brauereianlage (50) umfassend einen Wärmespeicher (5), einen Wärmeerzeuger (9), mindestens einen rekuperativen Wärmetauscher (27), , und zumindest eine Würzekoch- und/oder Würzeheißhalteeinrichtung (51),
**dadurch gekennzeichnet, dass,**
die Würzekoch- und/oder Würzeheißhalteeinrichtung (51) mit dem Wärmeerzeuger (9) verbunden ist, um ein Speichermedium (4) aus dem Wärmeerzeuger (9) zu empfangen; und
ein Rücklauf (12) der Würzekoch- und/oder Würzeheißhalteeinrichtung (51) mit einer Zwischensicht (102) des Wärmespeichers (5) über ein Belademittel (20) verbunden ist.

2. Brauereianlage (50) nach Anspruch 1, wobei ein Rücklauf (12) des rekuperativen Wärmetauschers (27) mit der Zwischensicht (102) des Wärmespeichers (5) über ein Belademittel (20) verbunden ist.

3. Brauereianlage (50) nach einem der vorangehenden Ansprüche, wobei der Würzekoch- und/oder Würzeheißhalteeinrichtung (51) ein Speichermedium (4) aus einer oberen Schicht (101) des Wärmespeichers (5) zuführbar ist.

4. Brauereianlage (50) nach einem der vorangehenden Ansprüche, wobei die Würzekoch- und/oder Würzeheißhalteeinrichtung (51) zusätzlich mit der oberen Schicht (101) des Wärmespeichers verbunden ist, damit der Würzekoch- und/oder Würzeheißhalteeinrichtung (51), zusätzlich zum Wärmeerzeuger (9), aus der oberen Schicht (101) des Wärmespeichers (5), das Speichermedium (4) zuführbar ist.

5. Brauereianlage (50) nach einem der vorangehenden Ansprüche, wobei, zusätzlich zumindest ein Element aus der Gruppe von Maischbottichpfanne (54), Maischbottich (55), Flaschenreinigungsmaschine (56), Läuterwürzeerhitzer (53), CIP-Anlage (57) oder weitere zweite Wärmeverbraucher (6) mit Entnahmestellen (22) aus der oberen Schicht (101) und/oder der Zwischensicht (102) des Wärmespeichers (5) verbunden sind, so dass diesem Speichermedium (4) zuführbar ist und deren Rückläufe (14) über das Belademittel (20) mit der unteren Schicht (103) des Wärmespeichers (5) verbunden sind, so dass dem Wärmespeicher (5) ein Speichermedium (4) zuführbar ist.

6. Brauereianlage (50) nach Anspruch 5, wobei zwischen der oberen Schicht (101) und der unteren Schicht (103) im Wärmespeicher (5) ein Temperaturbereich von 150°C bis 70°C vorherrschen kann.

7. Brauereianlage (50) nach einem der Ansprüche 5 oder 6, wobei die obere Schicht (101) ein Temperaturniveau von 105°C bis 130°C, bevorzugt von 105°C bis 120°C, die Zwischenschicht (102) ein Temperaturniveau von 90°C bis mindestens zur Siedetemperatur des Speichermediums (4), bevorzugt von 95°C bis 98°C, und die untere Schicht (103) ein Temperaturniveau unter 90°C, bevorzugt von 75°C bis 85°C, aufweist.

8. Brauereianlage (50) nach einem der vorangehenden Ansprüche, wobei eine Steuerung (40) vorgesehen ist, die den Zufluss über die Belademittel (20) und einer Entnahme an Entnahmestellen (22) derart steuert, dass jede der Schichten (S1, S2, S3) mit den jeweils zugeordneten Belademitteln (20) bzw. den Entnahmestellen (22) verbunden bleibt, und die Steuerung (40) ebenfalls mit der Mischeinrichtung (24) verbunden ist, um die Temperatur des Speichermediums (4) einzustellen, damit zumindest einem der Elemente aus der Gruppe von Würzekoch- und/oder Würzeheißhalteeinrichtung (51), Läuterwürzeerhitzer (53), Maischbottichpfanne (54), Maischbottich (55), Flaschenreinigungsmaschine (56), CIP-Anlage (57) und weiteren zweiten Wärmeverbrauchern (6) zuführbar ist.

9. Verfahren zur Wärmespeicherung bei einer Brauereianlage (50),
**gekennzeichnet durch die folgenden Schritte:**
• Beladen eines Wärmespeichers (5) bei einer Brauereianlage (50) mit einem Speichermedium (4), so dass im Wärmespeicher (5) mindestens drei diskrete Schichten (S1, S2, S3) ausgebildet werden, die sich hinsichtlich der Temperaturbereiche unterscheiden, wobei eine obere Schicht (101) mit einem Speichermedium (4) eines ersten Temperaturniveaus von einem Wärmeerzeuger (9), eine Zwischenschicht (102) mit einem Speichermedium (4) eines zweiten Temperaturniveaus aus dem mindestens einem Rücklauf (12) mindestens eines ersten Wärmeverbrauchers (7) und eine untere Schicht (103) mit einem Speichermedium (4) eines dritten Temperaturniveaus aus mindestens einem Rücklauf (14) eines mindestens zweiten Wärmeverbrauchers (6) gezielt beladen wird;
• Entnehmen des Speichermediums (4) aus der Zwischenschicht (102) und/oder der unteren Schicht (103) und Zuführen des Speichermediums (4) zum Wärmeerzeuger (9);
• Entnehmen des Speichermediums (4) entweder aus der oberen Schicht (101) und/oder Entnehmen des Speichermediums (4) aus der Zwischensicht (102), das jeweils mindestens einem zweiten Wärmeverbraucher (6) zugeführt wird;
• Zuführen des Speichermediums (4) aus mindestens einem Rücklauf (14) des mindestens zweiten Wärmeverbrauchers (6) zu der unteren Schicht (103) des Wärmespeichers (5); und
• Zuführen des Speichermediums (4) aus dem mindestens einen Rücklauf (12) des mindestens einen ersten Wärmeverbrauchers (7) zu der Zwischenschicht (102) des Wärmespeichers (5).

10. Verfahren nach Anspruch 9, wobei in einem weiteren Schritt das Entnehmen des Speichermediums (4) aus der Zwischenschicht (102) und das Zuführen des Speichermediums (4) der Zwischenschicht (102) zu einem rekuperativen Wärmetauscher (27) erfolgt.

11. Verfahren nach Anspruch 10, wobei über ein der oberen Schicht (101) zugeordnetes Belademittel (20) ein Speichermedium (4) aus dem Wärmeerzeuger (9) der oberen Schicht (101) zugeführt wird und dass mit dem Belademittel (20) aus der oberen Schicht (101) und/oder aus dem Wärmeerzeuger (9) das Speichermedium (4) dem mindestens einen ersten Wärmeverbraucher (7) zugeführt wird.

12. Verfahren nach Anspruch 11, wobei das Speichermedium (4) im Rücklauf (14) des mindestens einen zweiten Wärmeverbrauchers (6) mit dem Belademittel (20) der unteren Schicht (103) zugeführt wird.

13. Verfahren nach einem der vorangegangenen Ansprüche 9 bis 12, wobei über eine Steuerung (40) ein Zufluss über die Belademittel (20) und eine Entnahme an den Entnahmestellen (22) derart gesteuert wird, dass jede der Schichten (S1, S2, S3) mit den jeweils zugeordneten Belademitteln (20) bzw. den Entnahmestellen (22) verbunden bleibt.

14. Verfahren nach einem der vorangehenden Ansprüche 9 bis 13, wobei die dem mindestens einen ersten Wärmeverbraucher (7) zugeordnete Mischeinrichtung (24) mittels der Steuerung (40) gesteuert wird, dass dem ersten Wärmeverbraucher (7), Speichermedium (4) aus dem Wärmeerzeuger (9) und/oder aus der oberen Schicht (101) zugeführt wird und wobei eine jede einem jeden zweiten Wärmeverbraucher (6) zugeordnete Mischeinrichtung (24) mittels der Steuerung (40) gesteuert wird, dass einem jeden zweiten Wärmeverbraucher (6) das Speichermedium (4) aus der Zwischenschicht (102) und bei Bedarf aus der oberen Schicht (101) zugeführt wird und so die Temperatur des zugeführten Speichermediums (4) nach Bedarf des jeweiligen zweiten Wärmeverbrauchers (6) eingestellt werden kann und wobei eine im Rücklauf (12) des ersten Wärmeverbrauchers (7) und des rekuperativen Wärmetauschers (27) vorgesehene Misch (24) mittels der Steuerung (40) gesteuert wird, dass über eine Leitung (32) einer zum Wärmeerzeuger (9) führenden Leitung (30) das Speichermedium (4) aus dem Rücklauf (12) und/oder aus der Zwischenschicht (102) zugeführt wird und so die Temperatur des zugeführten Speichermediums (4) nach Bedarf für den Wärmeerzeuger (9) eingestellt werden kann.

15. Verfahren nach einem der vorangehenden Ansprüche 13 - 14, wobei die Steuerung (40) mit Sensoren (28) verbunden ist, die räumliche Ausdehnung der mindestens drei Schichten (S1, S2, S3) ermitteln.
